# EUROPEAN PATENT APPLICATION

(11) **EP 3 943 980 A1**
(43) Date of publication of application: **26.01.2022**
(21) Application number: 20773921.0
(22) Date of filing: 03.03.2020
(51) Int. Cl.: G01S 13/34, G01S 7/40

(54) **ELECTRONIC DEVICE, ELECTRONIC DEVICE CONTROL METHOD, AND ELECTRONIC DEVICE CONTROL PROGRAM**

(30) Priority: 20.03.2019 JP 2019053691
(71) Applicant: Kyocera Corporation, Kyoto-shi, Kyoto 612-8501 (JP)
(72) Inventor: NISHIKIDO, Masamitsu, Kyoto-shi, Kyoto 612-8501 (JP); SAHARA, Tooru, Kyoto-shi, Kyoto 612-8501 (JP); MURAKAMI, Youhei, Kyoto-shi, Kyoto 612-8501 (JP); KAWAJI, Satoshi, Kyoto-shi, Kyoto 612-8501 (JP); HOMMA, Takuya, Kyoto-shi, Kyoto 612-8501 (JP); SATO, Masayuki, Kyoto-shi, Kyoto 612-8501 (JP)
(74) Representative: Viering, Jentschura & Partner mbB Patent- und Rechtsanwälte
(86) International application number: PCT/JP2020/008989
(87) International publication number: WO 2020/189262

(57) **Abstract**

An electronic device includes a transmission antenna, a reception antenna, and a controller. The transmission antenna transmits a transmission wave. The reception antenna receives a reflected wave that is the reflected transmission wave. The controller detects an object that reflects the transmission wave, based on a transmission signal transmitted as the transmission wave and a reception signal received as the reflected wave. The controller configures a transmission signal in a second frame among a plurality of frames of the transmission wave differently from a transmission signal in a first frame among the plurality of frames.

## Description

### Cross-Reference To Related Applications

This application claims priority from Japanese Patent Application No. 2019-053691 filed in Japan on March 20, 2019, the entire disclosure of which is incorporated herein by reference.

### Technical Field

The present disclosure relates to an electronic device, and a method and a program for controlling the same.

### Background Art

For example, in fields such as automobile-related industries, a technology for measuring a distance or the like between a vehicle of interest and a predetermined object is regarded as important. Recently, various studies have been conducted particularly on a radar (Radio Detecting and Ranging) technology for measuring a distance or the like to an object such as an obstacle by transmitting a radio wave such as a millimeter wave and receiving a reflected wave that has reflected off the object. Such a technology for measuring a distance or the like expectedly becomes more important in the future with progresses of a technology for assisting drivers in driving and a technology related to automated driving for partially or entirely automating driving.

Various suggestions have been made in relation to a technology for detecting the presence of a predetermined object by receiving a reflected wave of a radio wave that has been transmitted and has reflected off the object. For example, PTL 1 discloses an FMCW radar device. The FMCW radar device performs linear frequency modulation (FM) on a transmission signal at a particular period, and radiates the transmission signal toward a target object. The FMCW radar device then detects a beat signal on the basis of a difference between the transmission signal and a reception signal from the target object, and measures a distance and/or a velocity through frequency analysis of this signal. For example, PTL 2 discloses a technique that enables a transmitter that uses a high frequency signal of several tens of GHz as a transmission wave to control the phase of the transmission wave to any value with high accuracy.

### Citation List

### Patent Literature

PTL 1: Japanese Unexamined Patent Application Publication No. 11-133144
PTL 2: International Publication No. 2016/167253 Summary of Invention

In an embodiment, an electronic device includes a transmission antenna, a reception antenna, and a controller. The transmission antenna transmits a transmission wave. The reception antenna receives a reflected wave that is the reflected transmission wave.

The controller detects an object that reflects the transmission wave, based on a transmission signal transmitted as the transmission wave and a reception signal received as the reflected wave.

The controller sets, for each frame of the transmission wave, any of a plurality of ranges in which the object is detected based on the transmission signal and the reception signal.

In an embodiment, an electronic device includes a transmission antenna, a reception antenna, and a controller. The transmission antenna transmits a transmission wave. The reception antenna receives a reflected wave that is the reflected transmission wave.

The controller detects an object that reflects the transmission wave, based on a transmission signal transmitted as the transmission wave and a reception signal received as the reflected wave.

The controller sets, based on at least any of a frame, part constituting a frame, and a chirp signal, any of a plurality of ranges in which the object is detected based on the transmission signal and the reception signal.

In an embodiment, a method for controlling an electronic device includes
(1) a step of transmitting a transmission wave from a transmission antenna,
(2) a step of receiving, from a reception antenna, a reflected wave that is the reflected transmission wave,
(3) a step of detecting an object that reflects the transmission wave, based on a transmission signal transmitted as the transmission wave and a reception signal received as the reflected wave, and
(4) a step of setting, for each frame of the transmission wave, any of a plurality of ranges in which the object is detected based on the transmission signal and the reception signal.

In an embodiment, a program for controlling an electronic device causes a computer to perform the steps (1) to (4) above.

### Brief Description of Drawings

[Fig. 1] Fig. 1 is a diagram for describing how an electronic device according to a first embodiment is used.
[Fig. 2] Fig. 2 is a functional block diagram schematically illustrating a configuration of the electronic device according to the first embodiment.
[Fig. 3] Fig. 3 is a diagram for describing a configuration of transmission signals according to the first embodiment.
[Fig. 4] Fig. 4 is a diagram for describing an operation of the electronic device according to the first embodiment.
[Fig. 5] Fig. 5 is a diagram illustrating an example of arrangement of transmission antennas and reception antennas in the electronic device according to the first embodiment.
[Fig. 6] Fig. 6 is a diagram illustrating another example of arrangement of the transmission antennas and the reception antennas in the electronic device according to the first embodiment.
[Fig. 7] Fig. 7 is a diagram for describing a distance within which the electronic device according to one embodiment performs detection of an object.
[Fig. 8] Fig. 8 is a diagram for describing an example in which an object detection range is set for each frame in the first embodiment.
[Fig. 9] Fig. 9 is a diagram for describing an example in which the object detection range is set for each part constituting a frame in the first embodiment.
[Fig. 10] Fig. 10 is a diagram for describing an example in which the object detection range is set for each chirp signal constituting a frame in the first embodiment.
[Fig. 11] Fig. 11 is a flowchart for describing an operation of the electronic device according to the first embodiment.
[Fig. 12] Fig. 12 is a diagram for describing an example in which the object detection ranges are set in a frame in the first embodiment.
[Fig. 13] Fig. 13 is a functional block diagram schematically illustrating a configuration of an electronic device according to a second embodiment.
[Fig. 14] Fig. 14 is a diagram illustrating a configuration of frames in the second embodiment.
[Fig. 15] Fig. 15 is a diagram illustrating a configuration of frames in a third embodiment.
[Fig. 16] Fig. 16 is a diagram illustrating a configuration of frames in the third embodiment.
[Fig. 17] Fig. 17 is a diagram illustrating a configuration of frames in the third embodiment.
[Fig. 18] Fig. 18 is a diagram illustrating a configuration of frames in the third embodiment. Description of Embodiments

Convenience is desirably improved in a technology for detecting a predetermined object by receiving a reflected wave of a transmission wave that has been transmitted and has reflected off the object. An object of the present disclosure is to provide an electronic device, a method for controlling an electronic device, and a program for controlling an electronic device that may improve convenience in detection of an object. According to one embodiment, an electronic device, a method for controlling an electronic device, and a program for controlling an electronic device that may improve convenience in detection of an object can be provided. Some embodiments are described in detail below with reference with the drawings.

### (First Embodiment)

An electronic device according to a first embodiment is mounted in a vehicle (mobility device) such as an automobile, for example, and thus is capable of detecting a predetermined object located around the mobility device. To this end, the electronic device according to the first embodiment is capable of transmitting a transmission wave to an area around the mobility device from a transmission antenna installed on the mobility device. The electronic device according to the first embodiment is also capable of receiving a reflected wave of the reflected transmission wave, from a reception antenna installed on the mobility device. At least one of the transmission antenna and the reception antenna may be included in a radar sensor or the like installed on the mobility device, for example.

A configuration in which the electronic device according to the first embodiment is mounted in an automobile such as a passenger car is described below as a typical example. However, the mobility device in which the electronic device according to the first embodiment is mounted is not limited to an automobile. The electronic device according to the first embodiment may be mounted in various mobility devices such as a bus, a track, a motorcycle, a bicycle, a ship, an aircraft, a farm vehicle such as tractor, and a drone. The mobility device in which the electronic device according to the first embodiment is mounted is not necessarily limited to a mobility device that moves by its own motive power. For example, the mobility device in which the electronic device according to the first embodiment is mounted may be a trailer towed by a tractor. The electronic device according to the first embodiment is capable of measuring a distance or the like between a sensor and a predetermined object when at least one of the sensor and the object is movable. The electronic device according to the first embodiment is also capable of measuring the distance or the like between the sensor and the object even when both the sensor and the object are stationary.

An example of how the electronic device according to the first embodiment detects an object is described first.

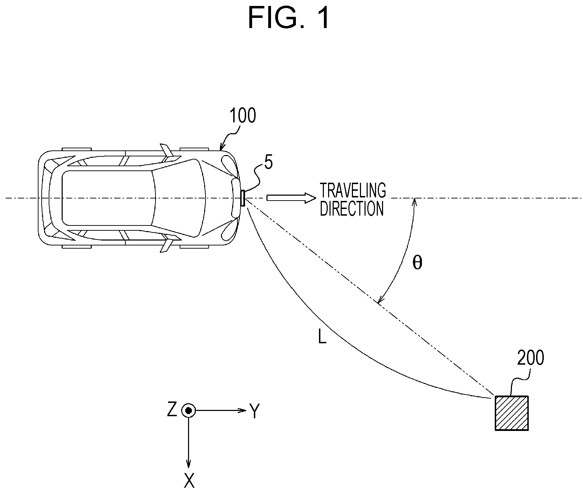

Fig. 1 is a diagram for describing how the electronic device according to the first embodiment is used. Fig. 1 illustrates an example in which a sensor including a transmission antenna and a reception antenna according to the first embodiment is installed on a mobility device.

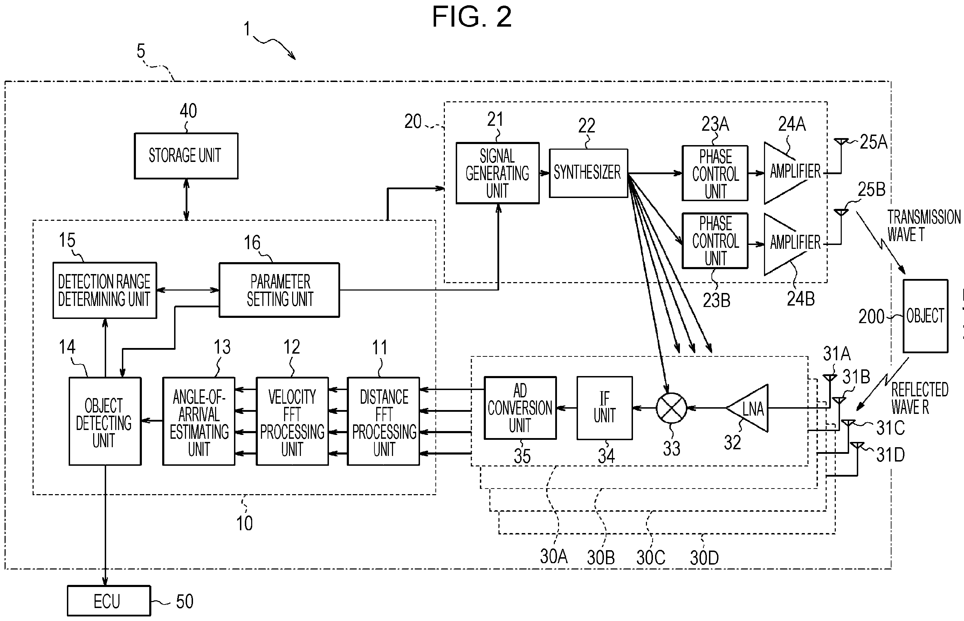

A sensor 5 including a transmission antenna and a reception antenna according to the first embodiment is installed on a mobility device 100 illustrated in Fig. 1. It is assumed that an electronic device 1 according to the first embodiment is also mounted (for example, built) in the mobility device 100 illustrated in Fig. 1. A specific configuration of the electronic device 1 is described later. The sensor 5 may include at least one of the transmission antenna and the reception antenna, for example. The sensor 5 may also appropriately include at least any of other functional units, such as at least part of a controller 10 (Fig. 2) included in the electronic device 1. The mobility device 100 illustrated in Fig. 1 may be an automotive vehicle such as a passenger car but may be a mobility device of any type. In Fig. 1, the mobility device 100 may move (travel or slowly travel), for example, in a positive Y-axis direction (traveling direction) illustrated in Fig. 1 or in another direction, or may be stationary without moving.

As illustrated in Fig. 1, the sensor 5 including the transmission antenna is installed on the mobility device 100. In the example illustrated in Fig. 1, only one sensor 5 including the transmission antenna and the reception antenna is installed at a front portion of the mobility device 100. The position where the sensor 5 is installed on the mobility device 100 is not limited to the position illustrated in Fig. 1 and may be another appropriate position. For example, the sensor 5 illustrated in Fig. 1 may be installed on a left side, on a right side, and/or on a rear side of the mobility device 100. The number of such sensors 5 may be any number equal to or greater than 1 depending on various conditions (or requirements) such as a range and/or an accuracy of measurement performed by the mobility device 100. The sensor 5 may be installed inside the mobility device 100. The inside may refer to, for example, a space in a bumper, a space in a headlight, a space in a driving space, or the like.

The sensor 5 transmits an electromagnetic wave as a transmission wave from the transmission antenna. For example, when a predetermined object (for example, an object 200 illustrated in Fig. 1) is located around the mobility device 100, at least part of the transmission wave transmitted from the sensor 5 reflects off the object to become a reflected wave. For example, the reception antenna of the sensor 5 receives such a reflected wave. In this manner, the electronic device 1 mounted in the mobility device 100 can detect the object.

The sensor 5 including the transmission antenna may be typically a radar (Radio Detecting and Ranging) sensor that transmits and receives a radio wave. However, the sensor 5 is not limited to a radar sensor. The sensor 5 according to the first embodiment may be, for example, a sensor based on LIDAR (Light Detection and Ranging, Laser Imaging Detection and Ranging) technology that uses an optical wave. Each of these sensors can include, for example, a patch antenna. Since the technologies such as RADAR and LIDAR are already known, detailed description may be appropriately simplified or omitted.

The electronic device 1 mounted in the mobility device 100 illustrated in Fig. 1 receives, from the reception antenna, the reflected wave of the transmission wave transmitted from the transmission antenna of the sensor 5. In this manner, the electronic device 1 can detect the predetermined object 200 located within a predetermined distance from the mobility device 100. For example, as illustrated in Fig. 1, the electronic device 1 can measure a distance L between the mobility device 100, which is a vehicle of interest, and the predetermined object 200. The electronic device 1 can also measure a relative velocity between the mobility device 100, which is the vehicle of interest, and the predetermined object 200. The electronic device 1 can further measure a direction (an angle of arrival θ) from which the reflected wave from the predetermined object 200 arrives at the mobility device 100, which is the vehicle of interest.

The object 200 may be, for example, at least any of an oncoming automobile traveling in a lane adjacent to a lane of the mobility device 100, an automobile traveling side by side with the mobility device 100, an automobile traveling in front of or behind the mobility device 100 in the same lane, and the like. The object 200 may also be any object located around the mobility device 100, such as a motorcycle, a bicycle, a stroller, a pedestrian, a guardrail, a median strip, a road sign, a step on a sidewalk, a wall, or an obstacle. The object 200 may be in motion or stationary. For example, the object 200 may be an automobile or the like that is parked or stationary around the mobility device 100.

In Fig. 1, a ratio between a size of the sensor 5 and a size of the mobility device 100 does not necessarily indicates an actual ratio. Fig. 1 illustrates the sensor 5 that is install on an outer portion of the mobility device 100. However, in the first embodiment, the sensor 5 may be installed at various positions of the mobility device 100. For example, in the first embodiment, the sensor 5 may be installed inside a bumper of the mobility device 100 so as not to be seen in the appearance of the mobility device 100.

Description is given below on the assumption that the transmission antenna of the sensor 5 transmits a radio wave in a frequency band, such as a millimeter wave (equal to or higher than 30 GHz) or a quasi-millimeter wave (for example, around 20 GHz to 30 GHz) as a typical example. For example, the transmission antenna of the sensor 5 may transmit a radio wave having a frequency bandwidth of 4 GHz such as from 77 GHz to 81 GHz.

Fig. 2 is a functional block diagram schematically illustrating an example of a configuration of the electronic device 1 according to the first embodiment. An example of the configuration of the electronic device 1 according to the first embodiment is described below.

When a distance or the like is measured by using a millimeter-wave radar, a frequency-modulated continuous wave radar (hereinafter, referred to as an FMCW radar) is often used. The FMCW radar sweeps a frequency of a to-be-transmitted radio wave to generate a transmission signal. Thus, a frequency of the radio wave used by such a millimeter-wave FMCW radar, which uses a radio wave of a frequency band of 79 GHz, for example, has a frequency bandwidth of 4 GHz such as from 77 GHz to 81 GHz, for example. The radar of the frequency bandwidth of 79 GHz has a characteristic that the usable frequency bandwidth is wider than another millimeter-wave and/or quasi-millimeter-wave radar of a frequency band of 24 GHz, 60 GHz, or 76 GHz, for example. Such an embodiment is described below.

As illustrated in Fig. 2, the electronic device 1 according to the first embodiment is constituted by the sensor 5 and an ECU (Electronic Control Unit) 50. The ECU 50 controls various operations of the mobility device 100. The ECU 50 may be constituted by at least one or more ECUs. The electronic device 1 according to the first embodiment includes the controller 10. The electronic device 1 according to the first embodiment may also appropriately include another functional unit such as at least any of a transmitter 20, receivers 30A to 30D, and a storage unit 40. As illustrated in Fig. 2, the electronic device 1 may include a plurality of receivers such as the receivers 30A to 30D. When the receivers 30A, 30B, 30C, and 30D are not distinguished from one another, the receivers 30A, 30B, 30C, and 30D are simply referred to as "receivers 30" below.

The controller 10 may include a distance FFT processing unit 11, a velocity FFT processing unit 12, an angle-of-arrival estimating unit 13, an object detecting unit 14, a detection range determining unit 15, and a parameter setting unit 16. These functional units included in the controller 10 are further described later.

As illustrated in Fig. 2, the transmitter 20 may include a signal generating unit 21, a synthesizer 22, phase control units 23A and 23B, amplifiers 24A and 24B, and transmission antennas 25A and 25B. When the phase control units 23A and 23B are not distinguished from each other, the phase control units 23A and 23B are simply referred to as "phase control units 23" below. When the amplifiers 24A and 24B are not distinguished from each other, the amplifiers 24A and 24B are simply referred to as "amplifiers 24" below. When the transmission antennas 25A and 25B are not distinguished from each other, the transmission antennas 25A and 25B are simply referred to as "transmission antennas 25" below.

As illustrated in Fig. 2, each of the receivers 30 may include a respective one of reception antennas 31A to 31D. When the reception antennas 31A, 31B, 31C, and 31D are not distinguished from one another, the reception antennas 31A, 31B, 31C, and 31D are simply referred to as "reception antennas 31" below. As illustrated in Fig. 2, each of the plurality of receivers 30 may include an LNA 32, a mixer 33, an IF unit 34, and an AD conversion unit 35. The receivers 30A to 30D may have the same and/or similar configuration. Fig. 2 schematically illustrates the configuration of only the receiver 30A as a representative example.

The sensor 5 described above may include, for example, the transmission antennas 25 and the reception antennas 31. The sensor 5 may also appropriately include at least any of other functional units such as the controller 10.

The controller 10 included in the electronic device 1 according to the first embodiment is capable of controlling various functional units of the electronic device 1 and also controlling operations of the entire electronic device 1. To provide control and processing capabilities for executing various functions, the controller 10 may include at least one processor, for example, a CPU (Central Processing Unit). The controller 10 may be collectively implemented by one processor, may be implemented by some processors, or may be implemented discrete individual processors. The processor may be implemented as one IC. The IC is also referred to as an integrated circuit. The processor may be implemented as a plurality of ICs and discrete circuits connected to be able to perform communication. The processor may be implemented on the basis of various other known technologies. In the first embodiment, the controller 10 may be configured as, for example, a CPU and a program executed by the CPU. The controller 10 may appropriately include a memory required for operations of the controller 10.

The storage unit 40 may store a program executed in the controller 10, results of processing performed by the controller 10, etc. The storage unit 40 may function as a work memory of the controller 10. The storage unit 40 may be constituted, for example, by a semiconductor memory or a magnetic disk. However, the storage unit 40 is not limited to these, and can be any storage device. The storage unit 40 may be, for example, a storage medium such as a memory card inserted to the electronic device 1 according to the present embodiment. The storage unit 40 may be an internal memory of the CPU used as the controller 10 as described above.

In the first embodiment, the storage unit 40 may store various parameters for setting a range in which an object is detected on the basis of a transmission wave T transmitted from the transmission antenna 25 and a reflected wave R received from the reception antenna 31. Such parameters are further described later.

In the electronic device 1 according to the first embodiment, the controller 10 is capable of controlling at least one of the transmitters 20 and the receivers 30. In this case, the controller 10 may control at least one of the transmitter 20 and the receivers 30 on the basis of various kinds of information stored in the storage unit 40. In the electronic device 1 according to the first embodiment, the controller 10 may instruct the signal generating unit 21 to generate a signal or may control the signal generating unit 21 to generate a signal.

In accordance with control performed by the controller 10, the signal generating unit 21 generates a signal (transmission signal) to be transmitted as the transmission wave T from each of the transmission antennas 25. When generating the transmission signal, the signal generating unit 21 may allocate a frequency of the transmission signal in accordance with control performed by the controller 10, for example. Specifically, the signal generating unit 21 may allocate a frequency of the transmission signal in accordance with a parameter set by the parameter setting unit 16. For example, the signal generating unit 21 receives frequency information from the controller 10 (the parameter setting unit 16) and generates a signal having a predetermined frequency in a frequency band such as from 77 GHz to 81 GHz, for example. The signal generating unit 21 may include a functional unit serving as a voltage control oscillator (VCO), for example.

The signal generating unit 21 may be configured as hardware having the function, as for example a microcomputer, or as for example a processor such as a CPU and a program or the like executed by the processor. Each functional unit described below may also be configured as hardware having the function, as for example a microcomputer if possible, or as for example a processor such as a CPU or a program or the like executed by the processor.

In the electronic device 1 according to the first embodiment, the signal generating unit 21 may generate a transmission signal (transmission chirp signal) such as a chirp signal, for example. In particular, the signal generating unit 21 may generate a signal (linear chirp signal) whose frequency changes linearly and periodically. For example, the signal generating unit 21 may generate a chirp signal whose frequency linearly and periodically increases from 77 GHz to 81 GHz as time elapses. For example, the signal generating unit 21 may generate a signal whose frequency periodically repeats a linear increase (up-chirp) from 77 GHz to 81 GHz and a decrease (down-chirp) as time elapses. The signal to be generated by the signal generating unit 21 may be set in advance by the controller 10, for example. The signal generated by the signal generating unit 21 may be stored in advance in the storage unit 40 or the like, for example. Since chirp signals used in a technical field such as a radar are known, more detailed description is appropriately simplified or omitted. The signal generated by the signal generating unit 21 is supplied to the synthesizer 22.

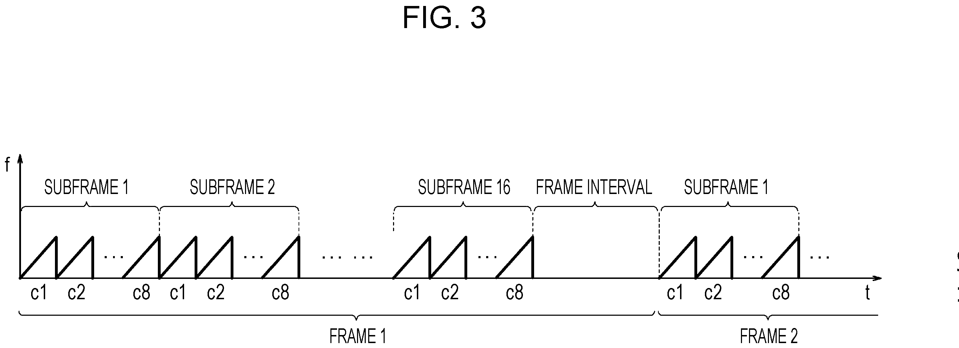

Fig. 3 is a diagram for describing an example of chirp signals generated by the signal generating unit 21.

In Fig. 3, the horizontal axis represents an elapse of time, and the vertical axis represents a frequency. In the example illustrated in Fig. 3, the signal generating unit 21 generates linear chirp signals whose frequency linearly changes periodically. In Fig. 3, the individual chirp signals are denoted by c1, c2, ..., c8. As illustrated in Fig. 3, the frequency of each chirp signal linearly increases as time elapses.

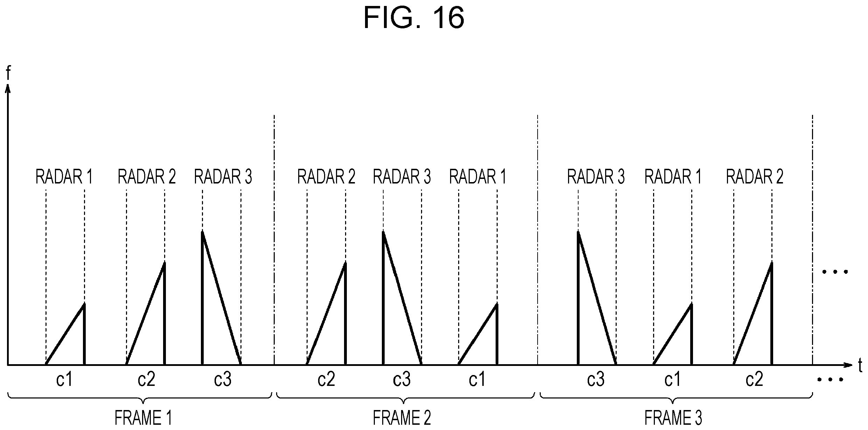

In the example illustrated in Fig. 3, eight chirp signals c1, c2, ..., c8 constitute one subframe. That is, each of subframes such as a subframe 1 and a subframe 2 illustrated in Fig. 3 includes eight chirp signals c1, c2, ..., c8. In the example illustrated in Fig. 3, 16 subframes such as the subframes 1 to 16 constitute one frame. That is, each of frames such as a frame 1 and a frame 2 illustrated in Fig. 3 includes 16 subframes. As illustrated in Fig. 3, a frame interval of a predetermined length may be included between frames. One frame illustrated in Fig. 3 may have a length of about 30 ms to 50 ms, for example. A frame refers to a set of at least one or more chirp signals. A frame may include at least one or more chirp signals. As for the chirp signals in a frame, chirp signals having the same amplitude and/or the same frequency may be included or chirp signals having different amplitudes and/or different frequencies may be included.

In Fig. 3, the frame 2 and subsequent frames may have the same and/or similar configuration. In Fig. 3, the frame 3 and subsequent frames may have the same and/or similar configuration. In the electronic device 1 according to the first embodiment, the signal generating unit 21 may generate a transmission signal as any number of frames. In Fig. 3, an illustration of some chirp signals is omitted. As described above, a relationship between time and a frequency of the transmission signal generated by the signal generating unit 21 may be stored in the storage unit 40 or the like, for example.

As described above, the electronic device 1 according to the first embodiment may transmit a transmission signal constituted by subframes each including a plurality of chirp signals. The electronic device 1 according to the first embodiment may transmit a transmission signal constituted by frames each including a predetermined number of subframes.

Description is given below on the assumption that the electronic device 1 transmits a transmission signal having a frame structure illustrated in Fig. 3. However, the frame structure illustrated in Fig. 3 is an example. For example, the number of chirp signals included in one subframe is not limited to eight. In the first embodiment, the signal generating unit 21 may generate a subframe including any number (for example, a plurality) of chirp signals. A subframe structure illustrated in Fig. 3 is an example. For example, the number of subframes included in one frame is not limited to 16. In the first embodiment, the signal generating unit 21 may generate a frame including any number (for example, a plurality) of subframes.

Referring back to Fig. 2, the synthesizer 22 increases the frequency of the signal generated by the signal generating unit 21 to a frequency in a predetermined frequency band. The synthesizer 22 may increase the frequency of the signal generated by the signal generating unit 21 to a frequency selected as a frequency of the transmission wave T to be transmitted from each of the transmission antennas 25. The frequency selected as the frequency of the transmission wave T to be transmitted from each of the transmission antennas 25 may be set by the controller 10, for example. For example, the frequency selected as the frequency of the transmission wave T to be transmitted from each of the transmission antennas 25 may be a frequency selected by the parameter setting unit 16. The frequency selected as the frequency of the transmission wave T to be transmitted from each of the transmission antennas 25 may be stored in the storage unit 40 or the like, for example. The signal whose frequency has been increased by the synthesizer 22 is supplied to the phase control unit 23 and the mixer 33. When the plurality of phase control units 23 are present, the signal whose frequency has been increased by the synthesizer 22 may be supplied to each of the plurality of phase control units 23. When the plurality of receivers 30 are present, the signal whose frequency has been increased by the synthesizer 22 may be supplied to each of the mixers 33 of the plurality of receivers 30.

Each of the phase control units 23 controls a phase of the transmission signal supplied from the synthesizer 22. Specifically, for example, in accordance with control performed by the controller 10, each of the phase control units 23 may appropriately advance or delay the phase of the signal supplied from the synthesizer 22 to adjust the phase of the transmission signal. In this case, on the basis of a difference between paths of the transmission waves T to be transmitted from the plurality of transmission antennas 25, the phase control units 23 may adjust the phases of the respective transmission signals. The phase control units 23 appropriately adjust the phases of the respective transmission signals. Consequently, the transmission waves T transmitted from the plurality of transmission antennas 25 enhance with each other in a predetermined direction to form a beam (beamforming). In this case, a correlation between a direction of beamforming and amounts of phase by which the respective transmission signals transmitted by the plurality of transmission antennas 25 are controlled may be stored in the storage unit 40, for example. The transmission signal whose phase is controlled by each of the phase control units 23 is supplied to a respective one of the amplifiers 24.

Each of the amplifiers 24 amplifies power (electric power) of the transmission signal supplied from a respective one of the phase control units 23 in accordance with control performed by the controller 10, for example. When the sensor 5 includes the plurality of transmission antennas 25, each of the plurality of amplifiers 24 may amplify power (electric power) of the transmission signal supplied from a respective one of the plurality of phase control units 23 in accordance with control performed by the controller 10, for example. Since the technology for amplifying power of a transmission signal is already known, more detailed description is omitted. Each of the amplifiers 24 is connected to a respective one of the transmission antennas 25.

The transmission antenna 25 outputs (transmits), as the transmission wave T, the transmission signal amplified by the amplifier 24. When the sensor 5 includes the plurality of transmission antennas 25, each of the plurality of transmission antennas 25 may output (transmit), as the transmission wave T, the transmission signal amplified by a respective one of the plurality of amplifiers 24. Since the transmission antennas 25 can be configured in the same and/or similar manner as transmission antennas for use in the known radar technology, more detailed description is omitted.

The electronic device 1 according to the first embodiment, which includes the transmission antennas 25, is capable of transmitting transmission signals (for example, transmission chirp signals) as the transmission waves T from the respective transmission antennas 25 in this manner. At least one of the functional units constituting the electronic device 1 may be housed in one housing. In this case, the one housing may have a hard-to-open structure. For example, the transmission antennas 25, the reception antennas 31, and the amplifiers 24 are desirably housed in one housing, and this housing desirably has a hard-to-open structure. When the sensor 5 is installed on the mobility device 100 such as an automobile, each of the transmission antennas 25 may transmit the transmission wave T to outside the mobility device 100 through a cover member such as a radar cover, for example. In this case, the radar cover may be made of a material, for example, a synthetic resin or rubber, that allows electromagnetic waves to pass therethrough. This radar cover may also serve as a housing of the sensor 5, for example. The transmission antennas 25 are covered with a member such as the radar cover, so that a risk of the transmission antennas 25 being damaged or malfunctioning because of a contact with an external object can be reduced. The radar cover and the housing may also be referred to as a radome.

Fig. 2 illustrates an example in which the electronic device 1 includes two transmission antennas 25. However, in the first embodiment, the electronic device 1 may include any number of transmission antennas 25. On the other hand, in the first embodiment, the electronic device 1 may include a plurality of transmission antennas 25 in the case where the transmission waves T transmitted from the respective transmission antennas 25 form a beam in a predetermined direction. In the first embodiment, the electronic device 1 may include a plurality of transmission antennas 25. In this case, the electronic device 1 may include the plurality of phase control units 23 and the plurality of amplifiers 24 to correspond to the plurality of transmission antennas 25. Each of the plurality of phase control units 23 may control the phase of a respective one of the plurality of transmission waves supplied from the synthesizer 22 and to be transmitted from the plurality of transmission antennas 25. Each of the plurality of amplifiers 24 may amplify power of a respective one of the plurality of transmission signals to be transmitted from the plurality of transmission antennas 25. In this case, the sensor 5 may include the plurality of transmission antennas. As described above, when the electronic device 1 illustrated Fig. 2 includes the plurality of transmission antennas 25, the electronic device 1 may include a plurality of functional units necessary for transmitting the transmission waves T from the plurality of transmission antennas 25.

Each of the reception antenna 31 receives the reflected wave R. The reflected wave R is the transmission wave T having reflected off the predetermined object 200. The reception antennas 31 may include a plurality of antennas such as the reception antennas 31A to 31D, for example. Since the reception antennas 31 can be configured in the same and/or similar manner as reception antennas for use in the known radar technology, more detailed description is omitted. Each of the reception antennas 31 is connected to the LNA 32. A reception signal based on the reflected wave R received by each of the reception antennas 31 is supplied to the LNA 32.

The electronic device 1 according to the first embodiment can receive, from each of the plurality of reception antennas 31, the reflected wave R that is the transmission wave T that has been transmitted as the transmission signal such as a chirp signal (transmission chirp signal), for example, and has reflected off the predetermined object 200. When the transmission chirp signal is transmitted as the transmission wave T in this manner, the reception signal based on the received reflected wave R is referred to as a reception chirp signal. That is, the electronic device 1 receives the reception signal (for example, the reception chirp signal) as the reflected wave R from each of the reception antennas 31. When the sensor 5 is installed on the mobility device 100 such as an automobile, each of the reception antennas 31 may receive the reflected wave R from outside the mobility device 100 through a cover member such as a radar cover, for example. In this case, the radar cover may be made of a material, for example, a synthetic resin or rubber, that allows electromagnetic waves to pass therethrough. This radar cover may also serve as a housing of the sensor 5, for example. The reception antennas 31 are covered with a member such as the radar cover, so that a risk of the reception antennas 31 being damaged or malfunctioning because of a contact with an external object can be reduced. The radar cover and the housing may also be referred to as a radome.

When the reception antennas 31 are installed near the transmission antennas 25, these may be collectively included in one sensor 5. That is, for example, one sensor 5 may include at least one transmission antenna 25 and at least one reception antenna 31. For example, one sensor 5 may include the plurality of transmission antennas 25 and the plurality of reception antennas 31. In such a case, one radar sensor may be covered with a cover member such as one radar cover, for example.

The LNA 32 amplifies, with low noise, the reception signal based on the reflected wave R received by a respective one of the reception antennas 31. The LNA 32 may be a low-noise amplifier and amplifies, with low noise, the reception signal supplied from a respective one of the reception antennas 31. The reception signal amplified by the LNA 32 is supplied to the mixer 33.

The mixer 33 mixes (multiplies) the reception signal having a radio frequency (RF) supplied from the LNA 32 and the transmission signal supplied from the synthesizer 22 to generate a beat signal. The beat signal obtained by the mixer 33 through mixing is supplied to the IF unit 34.

The IF unit 34 performs frequency conversion on the beat signal supplied from the mixer 33 to reduce the frequency of the beat signal to an intermediate frequency (IF). The beat signal whose frequency has been reduced by the IF unit 34 is supplied to the AD conversion unit 35.

The AD conversion unit 35 digitizes the analog beat signal supplied from the IF unit 34. The AD conversion unit 35 may be constituted by any analog-to-digital conversion circuit (Analog to Digital Converter (ADC)). The digitized beat signal obtained by the AD conversion unit 35 is supplied to the distance FFT processing unit 11 of the controller 10. In the case where there are the plurality of receivers 30, the beat signals each digitized by a respective one of the plurality of AD conversion units 35 may be supplied to the distance FFT processing unit 11.

The distance FFT processing unit 11 estimates a distance between the mobility device 100 equipped with the electronic device 1 and the object 200 on the basis of the beat signals supplied from the respective AD conversion units 35. The distance FFT processing unit 11 may include a processing unit that performs fast Fourier transform, for example. In this case, the distance FFT processing unit 11 may be configured as any circuit, any chip, or the like that performs fast Fourier transform (FFT).

The distance FFT processing unit 11 performs FFT processing (hereinafter, appropriately referred to as "distance FFT processing") on the beat signal that has been digitized by each of the AD conversion units 35. For example, the distance FFT processing unit 11 may perform the FFT processing on a complex signal supplied from each of the AD conversion units 35. The beat signal that has been digitized by each of the AD conversion units 35 can be represented as a temporal change in signal intensity (power). The distance FFT processing unit 11 performs FFT processing on such a beat signal, so that the beat signal can be represented as signal intensity (power) for each frequency. If a peak in a result obtained by the distance FFT processing is equal to or greater than a predetermined threshold, the distance FFT processing unit 11 may determine that the predetermined object 200 is located at the distance corresponding to the peak. For example, a constant false alarm rate (CFAR) detection process is known as a method for determining that there is an object (reflecting object) that reflects a transmission wave when a peak value that is equal to or greater than a threshold is detected from the average power or amplitude of a disturbance signal.

As described above, the electronic device 1 according to the first embodiment can detect the object 200 that reflects the transmission wave T on the basis of the transmission signal transmitted as the transmission wave T and the reception signal received as the reflected wave R.

The distance FFT processing unit 11 can estimate a distance to a predetermined object on the basis of one chirp signal (for example, c1 illustrated in Fig. 3). That is, the electronic device 1 can measure (estimate) the distance L illustrated in Fig. 1 by performing the distance FFT processing. Since a technique for measuring (estimating) a distance to a predetermined object by performing FFT processing on a beat signal is known, more detailed description is appropriately simplified or omitted. Results (for example, distance information) of the distance FFT processing performed by the distance FFT processing unit 11 may be supplied to the velocity FFT processing unit 12. The results of the distance FFT processing performed by the distance FFT processing unit 11 may also be supplied to the object detecting unit 14.

The velocity FFT processing unit 12 estimates a relative velocity between the mobility device 100 in which the electronic device 1 is mounted and the object 200 on the basis of the beat signals on which the distance FFT processing has been performed by the distance FFT processing unit 11. The velocity FFT processing unit 12 may include a processing unit that performs fast Fourier transform, for example. In this case, the velocity FFT processing unit 12 may be configured by any circuit, any chip, or the like that performs fast Fourier transform (FFT).

The velocity FFT processing unit 12 further performs FFT processing (hereinafter, appropriately referred to as "velocity FFT processing") on each beat signal on which the distance FFT processing has been performed by the distance FFT processing unit 11. For example, the velocity FFT processing unit 12 may perform the FFT processing on each complex signal supplied from the distance FFT processing unit 11. The velocity FFT processing unit 12 can estimate a relative velocity to the predetermined object on the basis of a subframe (for example, the subframe 1 illustrated in Fig. 3) including chirp signals. When the distance FFT processing is performed on the beat signal in the above-described manner, a plurality of vectors can be generated. The velocity FFT processing unit 12 can estimate a relative velocity to the predetermined object by determining a phase of a peak in a result of the velocity FFT processing performed on the plurality of vectors. That is, the electronic device 1 can measure (estimate) a relative velocity between the mobility device 100 and the predetermined object 200 illustrated in Fig. 1 by performing the velocity FFT processing. Since a technique for measuring (estimating) a relative velocity to a predetermined object by performing velocity FFT processing on a result of distance FFT processing is known, more detailed description is appropriately simplified or omitted. Results (for example, velocity information) of the velocity FFT processing performed by the velocity FFT processing unit 12 may be supplied to the angle-of-arrival estimating unit 13. The results of the velocity FFT processing performed by the velocity FFT processing unit 12 may also be supplied to the object detecting unit 14.

The angle-of-arrival estimating unit 13 estimates a direction from which the reflected wave R arrives from the predetermined object 200 on the basis of the results of the velocity FFT processing performed by the velocity FFT processing unit 12. The electronic device 1 can estimate the direction from which the reflected wave R arrives by receiving the reflected wave R from the plurality of reception antennas 31. For example, the plurality of reception antennas 31 are arranged at a predetermined interval. In this case, the transmission wave T transmitted from each of the transmission antennas 25 reflects off the predetermined object 200 to become the reflected wave R. Each of the plurality of reception antennas 31 arranged at the predetermined interval receives the reflected wave R. The angle-of-arrival estimating unit 13 can estimate the direction from which the reflected wave R arrives at each of the plurality of reception antennas 31 on the basis of the phase of the reflected wave R received by the reception antenna 31 and a difference in path of the reflected wave R. That is, the electronic device 1 can measure (estimate) the angle of arrival θ illustrated in Fig. 1 on the basis of the results of the velocity FFT processing.

Various techniques for estimating a direction from which the reflected wave R arrives on the basis of a result of velocity FFT processing have been proposed. For example, MUSIC (MUltiple SIgnal Classification), ESPRIT (Estimation of Signal Parameters via Rotational Invariance Technique), and the like are known as known arriving direction estimation algorithms. Thus, more detailed description of the known techniques is appropriately simplified or omitted. Information (angle information) of the angle of arrival θ estimated by the angle-of-arrival estimating unit 13 may be supplied to the object detecting unit 14.

The object detecting unit 14 detects an object located in a range in which the transmission waves T are transmitted, on the basis of the information supplied from at least any of the distance FFT processing unit 11, the velocity FFT processing unit 12, and the angle-of-arrival estimating unit 13. The object detecting unit 14 may perform detection of an object by performing, for example, clustering processing on the basis of the supplied distance information, velocity information, and angle information. For example, DBSCAN (Density-based spatial clustering of applications with noise) or the like is known as an algorithm used in clustering of data. In the clustering processing, for example, average power of points constituting the detected object may be calculated. The distance information, the velocity information, the angle information, and power information of the object detected by the object detecting unit 14 may be supplied to the detection range determining unit 15. The distance information, the velocity information, the angle information, and the power information of the object detected by the object detecting unit 14 may be supplied to the ECU 50. In this case, when the mobility device 100 is an automobile, communication may be performed using a communication interface such as a CAN (Controller Area Network), for example.

The detection range determining unit 15 determines a range (hereinafter, also referred to as an "object detection range") in which an object that reflects the transmission wave T is detected on the basis of the transmission signal and the reception signal. The detection range determining unit 15 may determine a plurality of object detection ranges on the basis of an operation performed by a driver or the like of the mobility device 100 equipped with the electronic device 1, for example. For example, the detection range determining unit 15 may determine a plurality of object detection ranges suitable for parking assist when a parking assist button is operated by a driver or the like of the mobility device 100. The detection range determining unit 15 may determine a plurality of object detection ranges on the basis of an instruction from the ECU 50, for example. For example, when the ECU 50 determines that the mobility device 100 is to travel backward, the detection range determining unit 15 may determine, on the basis of an instruction from the ECU 50, a plurality of object detection ranges suitable when the mobility device 100 travels backward. The detection range determining unit 15 may determine a plurality of object detection ranges on the basis of a change in an operation state of a steering wheel, an accelerator pedal, a transmission lever, or the like of the mobility device 100, for example. The detection range determining unit 15 may determine a plurality of object detection ranges on the basis of a result of object detection performed by the object detecting unit 14.

The parameter setting unit 16 sets various parameters that define a transmission signal and a reception signal with which an object that reflects the transmission wave T as the reflected wave R is to be detected. That is, the parameter setting unit 16 sets various parameters for transmitting the transmission wave T from each of the transmission antennas 25 and various parameters for receiving the reflected wave R from each of the reception antennas 31.

In particular, in the first embodiment, the parameter setting unit 16 may set various parameters related to transmission of the transmission wave T and reception of the reflected wave R in order to detect an object in the object detection range described above. For example, the parameter setting unit 16 may define a range or the like in which the reflected wave R is desirably received in order to receive the reflected wave R and detect the object in the object detection range. For example, the parameter setting unit 16 may define a range to which a beam of the transmission wave T is desirably directed in order to transmit the transmission wave T from each of the plurality of transmission antennas 25 and detect an object in the object detection range. The parameter setting unit 16 may also set various parameters for transmitting the transmission wave T and receiving the reflected wave R.

The various parameters set by the parameter setting unit 16 may be supplied to the signal generating unit 21. Thus, the signal generating unit 21 can generate the transmission signal to be transmitted as the transmission wave T on the basis of the various parameters set by the parameter setting unit 16. The various parameters set by the parameter setting unit 16 may be supplied to the object detecting unit 14. Thus, the object detecting unit 14 can perform object detection processing in the object detection range determined on the basis of the various parameters set by the parameter setting unit 16.

The ECU 50 included in the electronic device 1 according to the first embodiment is capable of controlling various functional units of the mobility device 100 and also controlling operations of the entire mobility device 100. To provide control and processing capabilities for executing various functions, the ECU 50 may include at least one processor, for example, a CPU (Central Processing Unit). The ECU 50 may be collectively implemented by one processor, may be implemented by some processors, or may be implemented discrete individual processors. The processor may be implemented as one IC. The IC is also referred to as an integrated circuit. The processor may be implemented as a plurality of ICs and discrete circuits connected to be able to perform communication. The processor may be implemented on the basis of various other known technologies. In the first embodiment, the ECU 50 may be configured as, for example, a CPU and a program executed by the CPU. The ECU 50 may appropriately include a memory required for operations of the ECU 50. At least part of the functions of the controller 10 may be functions of the ECU 50, or at least part of the functions of the ECU 50 may be functions of the controller 10.

The electronic device 1 illustrated in Fig. 2 includes the two transmission antennas 25 and the four reception antennas 31. However, the electronic device 1 according to the first embodiment may include any number of transmission antennas 25 and any number of reception antennas 31. For example, by including the two transmission antennas 25 and the four reception antennas 31, the electronic device 1 can be regarded to include a virtual antenna array that is virtually constituted by eight antennas. As described above, the electronic device 1 may receive the reflected wave R of 16 subframes illustrated in Fig. 3 by using, for example, the eight virtual antennas.

An operation of the electronic device 1 according to the first embodiment is described next.

Examples of recent sensors capable of detecting an obstacle located around a vehicle such as an automobile include various sensors such as a millimeter-wave radar, a LIDAR (Light Detection and Ranging, Laser Imaging Detection and Ranging), or an ultrasonic sensor. Among these sensors, a millimeter-wave radar is often employed from the viewpoint of accuracy, reliability, and cost of obstacle detection.

Examples of techniques for detecting an obstacle or the like around a vehicle by using a millimeter-wave radar include, for example, blind spot detection (BSD), cross traffic alert (CTA) during backward movement or exiting from a garage, and free space detection (FSD). In such detection, a radio wave radiation range that is dependent on a physical shape of antennas of a millimeter wave radar is commonly set in advance to determine an object detection range. That is, in each radar, the physical shape of the antennas of the millimeter-wave radar is commonly determined in advance depending on the use purpose, function, or the like of the radar, and the specification of the object detection range is also commonly defined in advance. Thus, a plurality of different radar sensors are needed to implement functions of a plurality of different radars.

However, preparing a plurality of radar sensors depending on the use purpose or function is disadvantageous from the viewpoint of cost. For example, if the physical shape of the antenna is determined in advance and the radiation range is also determined, changing the use purpose and function of the antenna is difficult. For example, when the physical shape and the radiation range of the antenna are determined and all objects located within the radiation range are detected, an amount of information to be processed increases. In this case, since an unnecessary object may also be erroneously detected as a target object, the reliability of detection may decrease. For example, if the physical shape and the radiation range of the antenna are determined and the number of sensors to be attached is increased, the weight of the vehicle (mainly harness) increases to decrease fuel efficiency or the power consumption increases to decrease fuel efficiency. When detection is performed by using a plurality of radar sensors, a delay may occur between the sensors. Therefore, if automated driving, driving assist, or the like is performed on the basis of such detection, processing may take time. This is because a processing speed of the CAN is slower than an update rate of the radar, and feedback also takes time. When detection is performed by using a plurality of sensors having different object detection ranges, control may become complicated.

Accordingly, the electronic device 1 according to the first embodiment enables one radar sensor to be used for a plurality of functions or use purposes. The electronic device 1 according to the first embodiment enables one radar sensor to perform operations as if the one radar sensor simultaneously implemented the plurality of functions or use purposes.

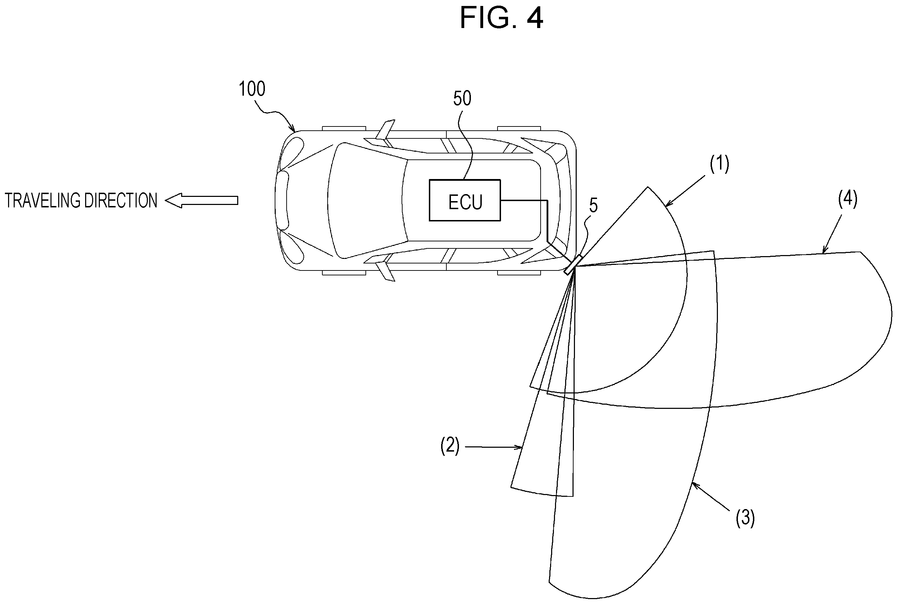

Fig. 4 is a diagram illustrating an operation of the electronic device 1 according to the first embodiment.

The electronic device 1 according to the first embodiment is mounted in the mobility device 100 illustrated in Fig. 4. As illustrated in Fig. 4, least one sensor 5 is installed on the left rear side of the mobility device 100. As illustrated in Fig. 4, the sensor 5 is connected to the ECU 50 mounted in the mobility device 100. In the mobility device 100 illustrated in Fig. 4, the sensor 5 that operates in the same and/or similar manner as the sensor 5 installed on the left rear side may be installed at a portion other than the left rear side. In the following description, the one sensor 5 installed on the left rear side alone is described, and description of other sensors is omitted. In the following description, at least any of the controller 10, the phase control units 23, and the ECU 50 can control each functional unit constituting the electronic device 1.

As illustrated in Fig. 4, the electronic device 1 according to the first embodiment is capable of detecting an object by selecting any of a plurality of detection ranges. The electronic device 1 according to the first embodiment is also capable of detecting an object by switching the detection range to any of the plurality of detection ranges. Fig. 4 illustrates ranges in which an object is detected on the basis of transmission signals transmitted by the electronic device 1 (specifically, the sensor 5) according to the first embodiment and reception signals received by the electronic device 1 (specifically, the sensor 5).

For example, when the electronic device 1 according to the first embodiment is used for a use purpose or function for parking assist, for example, the electronic device 1 is capable of performing detection of an object in a range (1) illustrated in Fig. 4 serving as the object detection range. The object detection range (1) illustrated in Fig. 4 may be a range that is the same as or similar to an object detection range of a radar designed exclusively for parking assist, for example. For example, when the electronic device 1 according to the first embodiment is used for a use purpose or function for free space detection (FSD), for example, the electronic device 1 is capable of performing detection of an object in a range (2) illustrated in Fig. 4 serving as the object detection range. The object detection range (2) illustrated in Fig. 4 may be the same as or similar to an object detection range of a radar designed exclusively for free space detection (FSD), for example.

For example, when the electronic device 1 according to the first embodiment is used for a use purpose or function of exit collision detection (CTA), the electronic device 1 is capable of performing detection of an object in a range (3) illustrated in Fig. 4 serving as the object detection range. The object detection range (3) illustrated in Fig. 4 may be the same as or similar to an object detection range of a radar designed exclusively for exit collision detection (CTA), for example. For example, when the electronic device 1 according to the first embodiment is used for a use purpose or function of blind spot detection (BSD), the electronic device 1 is capable of performing detection of an object in a range (4) illustrated in Fig. 4 serving as the object detection range. The object detection range (4) illustrated in Fig. 4 may be the same as or similar to an object detection range of a radar designed exclusively for blind spot detection (BSD), for example.

The electronic device 1 according to the first embodiment is capable of detecting an object by switching between a plurality of ranges, for example, the object detection ranges (1) to (4) illustrated in Fig. 4 in any manner. As described above, the plurality of ranges to be switched between in this case may be determined on the basis of, for example, an operation of a driver or the like of the mobility device 100, or may be determined on the basis of an instruction of the controller 10, the ECU 50, or the like.

When the electronic device 1 according to the first embodiment performs detection of an object in a plurality of object detection ranges from among the object detection ranges (1) to (4) in this manner, the detection range determining unit 15 may determine the plurality of object detection ranges on the basis of any information. Once the detection range determining unit 15 determines the plurality of object detection ranges, the parameter setting unit 16 sets various parameters for transmitting transmission signals and receiving reception signals in the plurality of determined object detection ranges. The various parameters set by the parameter setting unit 16 may be stored in the storage unit 40, for example.

Such parameters may be determined on the basis of, for example, actual measurement performed in a test environment, before the electronic device 1 performs detection of an object. When such parameters are not stored in the storage unit 40, parameters appropriately estimated by the parameter setting unit 16 on the basis of predetermined data such as past measurement data may be used. When such parameters are not stored in the storage unit 40, the parameter setting unit 16 may acquire appropriate parameters by accessing an external device via a network, for example.

As described above, in the first embodiment, the controller 10 detects an object that reflects the transmission wave T on the basis of the transmission signal transmitted as the transmission wave T and the reception signal received as the reflected wave R. In the first embodiment, the controller 10 enables a plurality of object detection ranges (for example, the object detection ranges (1) to (4) in Fig. 4) based on the transmission signal and the reception signal to be changed.

In the first embodiment, the controller 10 may enable a plurality of object detection ranges to be switched between. For example, the controller 10 that is performing detection of an object in the object detection range (3) may switch the range in which detection of an object is performed from the object detection range (3) to the object detection range (2). In the first embodiment, the controller 10 may enable a plurality of object detection ranges to be changeable depending on at least one of the use purpose and the function of detecting an object (such as parking assist (PA), blind spot detection (BSD), and so on). In the first embodiment, the controller 10 may enable a plurality of object detection ranges to be changed as a short time elapses, as described later. Such control is further described later.

In the first embodiment, the controller 10 may determine a plurality of object detection ranges on the basis of an object detection result. For example, when a predetermined object has already been detected through object detection, the controller 10 may determine the plurality of object detection ranges in accordance with the location of the detected object. In the first embodiment, the controller 10 may process only the transmission signal and the reception signal in any of the plurality of object detection ranges.

As described above, the electronic device 1 according to the first embodiment is capable of clipping (setting and/or switching) the detection range in detection of an object performed by using a millimeter-wave radar or the like, for example. Thus, the electronic device 1 according to the first embodiment is capable of flexibly adapting to a situation in which detection of an object is desirably performed in the plurality of object detection ranges. The electronic device 1 according to the first embodiment is capable of setting a wide object detection range in advance and clipping information only for a necessary detection range on the basis of information on a distance and/or an angle detected by the electronic device 1. Thus, the electronic device 1 according to the first embodiment can process information for the necessary detection range without increasing a processing load. Therefore, the electronic device 1 according to the first embodiment can improve the convenience in detection of an object.

The electronic device 1 according to the first embodiment enables the object detection range based on the transmission signal and the reception signal to be changed as illustrated in Fig. 4. The electronic device 1 may also direct a beam of the transmission wave T toward the object detection range. In this manner, the electronic device 1 according to the first embodiment can perform detection of an object in a desired clipping range with high accuracy.

For example, as described above, as the use purpose or function of blind spot detection (BSD), the electronic device 1 according to the first embodiment is capable of performing detection of an object by selecting the object detection range (4) from among the plurality of detection ranges illustrated in Fig. 4. The electronic device 1 according to the first embodiment may further form a beam (perform beamforming) of the transmission waves T transmitted from the plurality of transmission antennas 25 toward the direction of the object detection range (4). For example, when detection of a far object is performed, the object detection range can be covered with high accuracy by performing beamforming with the beam of the transmission waves transmitted from the plurality of transmission antennas 25 toward that direction.

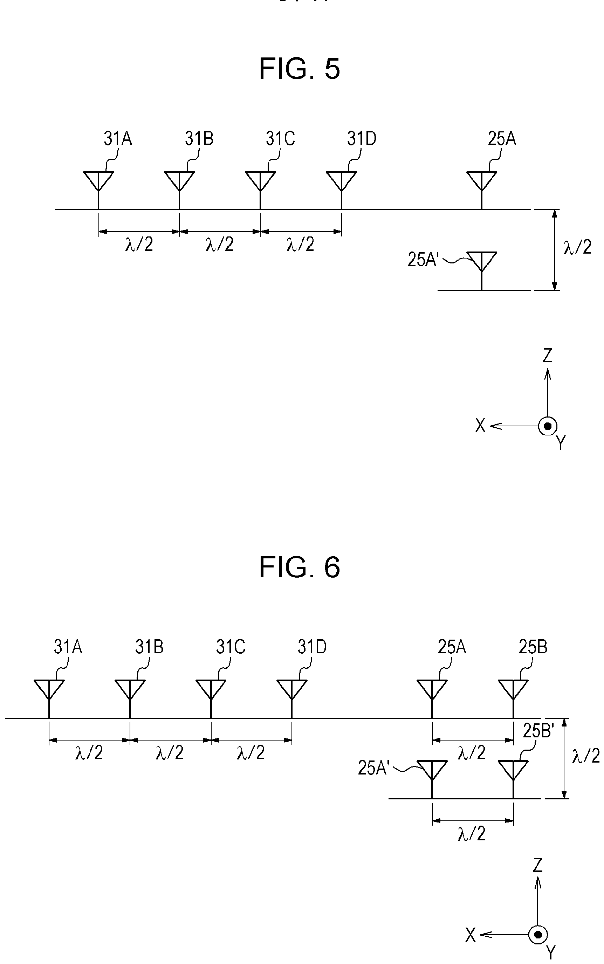

Figs. 5 and 6 are diagrams illustrating examples of arrangement of the transmission antennas and the reception antennas in the electronic device according to the first embodiment.

As illustrated in Fig. 5, the sensor 5 of the electronic device 1 according to the first embodiment may include, for example, two transmission antennas 25A and 25A'. As illustrated in Fig. 5, the sensor 5 of the electronic device 1 according to the first embodiment may include four reception antennas 31A, 31B, 31C, and 31D.

The four reception antennas 31A, 31B, 31C, and 31D are arranged in the horizontal direction (in an X-axis direction) at an interval of λ/2, where λ denotes a wavelength of the transmission wave T. By arranging the plurality of reception antennas 31 in the horizontal direction and receiving the transmission wave T with the plurality of reception antennas 31 in this manner, the electronic device 1 can estimate the direction from which the reflected wave R arrives. The wavelength λ of the transmission wave T may be a wavelength of the transmission wave T having a center frequency of 79 GHz when a frequency band of the transmission wave T is, for example, from 77 GHz to 81 GHz.

The two transmission antennas 25A and 25A' are arranged in a vertical direction (a Z-axis direction) at an interval of λ/2, where λ denotes the wavelength of the transmission wave T. By arranging the plurality of transmission antennas 25 in the vertical direction and transmitting the transmission wave T by the plurality of transmission antennas 25 in this manner, the electronic device 1 can change the direction of the beam of the transmission wave T in the vertical direction.

As illustrated in Fig. 6, the sensor 5 of the electronic device 1 according to the first embodiment may include, for example, four transmission antennas 25A, 25A', 25B, and 25B'.

As illustrated in Fig. 6, the two transmission antennas 25A and 25B are arranged in the horizontal direction (the X-axis direction) at an interval of λ/2, where λ denotes the wavelength of the transmission wave T. As illustrated in Fig. 6, the two transmission antennas 25A' and 25B' are arranged also in the horizontal direction (the X-axis direction) at an interval of λ/2, where λ denotes the wavelength of the transmission wave T. By arranging the plurality of transmission antennas 25 in the horizontal direction and transmitting the transmission wave T by the plurality of transmission antennas 25 in this manner, the electronic device 1 can change the direction of the beam of the transmission wave T also in the horizontal direction.

On the other hand, as illustrated in Fig. 6, the two transmission antennas 25A and 25A' are arranged in the vertical direction (the Z-axis direction) at an interval of λ/2, where λ denotes the wavelength of the transmission wave T. As illustrated in Fig. 6, the two transmission antennas 25B and 25B' are also arranged in the vertical direction (the Z-axis direction) at an interval of λ/2, where λ denotes the wavelength of the transmission wave T. Also in the arrangement illustrated in Fig. 6, by arranging the plurality of transmission antennas 25 in the vertical direction and transmitting the transmission wave T by the plurality of transmission antennas 25 in this manner, the electronic device 1 can change the direction of the beam of the transmission wave T in the vertical direction.

When the electronic device 1 according to the first embodiment performs beamforming on the transmission waves T transmitted from the plurality of transmission antennas 25, the plurality of transmission waves T may be set in phase in a predetermined direction on the basis of a difference between paths along which the transmission waves T are transmitted. In the electronic device 1 according to the first embodiment, in order to set the individual transmission waves T in phase in a predetermined direction, for example, the phase control units 23 may control the phase of at least one of the transmission waves transmitted from the plurality of transmission antennas 25.

An amount of phase to be controlled to set the plurality of transmission waves T in phase in a predetermined direction may be stored in the storage unit 40 in association with the predetermined direction. That is, a relationship between a direction of the beam and an amount of phase for beamforming may be stored in the storage unit 40.

Such a relationship may be determined on the basis of actual measurement performed in a test environment, for example, before the electronic device 1 performs detection of an object. When such a relationship is not stored in the storage unit 40, a relationship appropriately estimated by the phase control units 23 on the basis of predetermined data such as past measurement data may be used. When such a relationship is not stored in the storage unit 40, the phase control units 23 may acquire an appropriate relationship by accessing an external device via a network, for example.

In the electronic device 1 according to the first embodiment, at least one of the controller 10 and the phase control units 23 may perform control for performing beamforming of the transmission waves T transmitted from the plurality of transmission antennas 25. In the electronic device 1 according to the first embodiment, a functional unit including at least the phase control units 23 is also referred to as a transmission control unit.

As described above, in the electronic device 1 according to the first embodiment, the transmission antenna 25 may include a plurality of transmission antennas. In the electronic device 1 according to the first embodiment, the reception antenna 31 may also include a plurality of reception antennas. In the electronic device 1 according to the first embodiment, the transmission control unit (for example, the phase control units 23) may perform control such that the transmission waves T transmitted from the plurality of transmission antennas 25 form a beam in a predetermined direction (beamforming). In the electronic device 1 according to the first embodiment, the transmission control unit (for example, the phase control units 23) may form a beam in a direction toward the object detection range.

In the electronic device 1 according to the first embodiment, the transmission antennas 25 may include a plurality of transmission antennas 25 arranged to include a vertical direction component as described above. In this case, in the electronic device 1 according to the first embodiment, the phase control units 23 (transmission control unit) may change the direction of the beam in the direction toward the object detection range with the vertical direction component included.

In the electronic device 1 according to the first embodiment, the transmission antennas 25 may include a plurality of transmission antennas 25 arranged to include a horizontal direction component as described above. In this case, in the electronic device 1 according to the first embodiment, the phase control units 23 (transmission control unit) may change the direction of the beam in the direction toward the object detection range with the horizontal direction component included.

In the electronic device 1 according to the first embodiment, the transmission control unit (for example, the phase control units 23) may form a beam in a direction that covers at least part of the object detection range. In the electronic device 1 according to the first embodiment, the transmission control unit (for example, the phase control units 23) may control the phase of at least one of the plurality of transmission waves such that the transmission waves T each transmitted from a respective one of the plurality of transmission antennas 25 are in phase in a predetermined direction.

The electronic device 1 according to the first embodiment is capable of calculating a phase compensation value on the basis of frequency information of wide frequency band signals (for example, FMCW signals) output from the plurality of transmission antennas 25 and performing frequency-dependent phase compensation for each of the plurality of transmission antennas. Consequently, the electronic device 1 according to the first embodiment can perform, with high accuracy, beamforming in a particular direction in the entire frequency band that can be set for the transmission signals.

Such beamforming can extend an object detectable distance in a particular direction in which object detection is needed. The beamforming described above can reduce a reflected signal from an unnecessary direction. Therefore, the accuracy of detecting the distance and/or the angle can be improved.

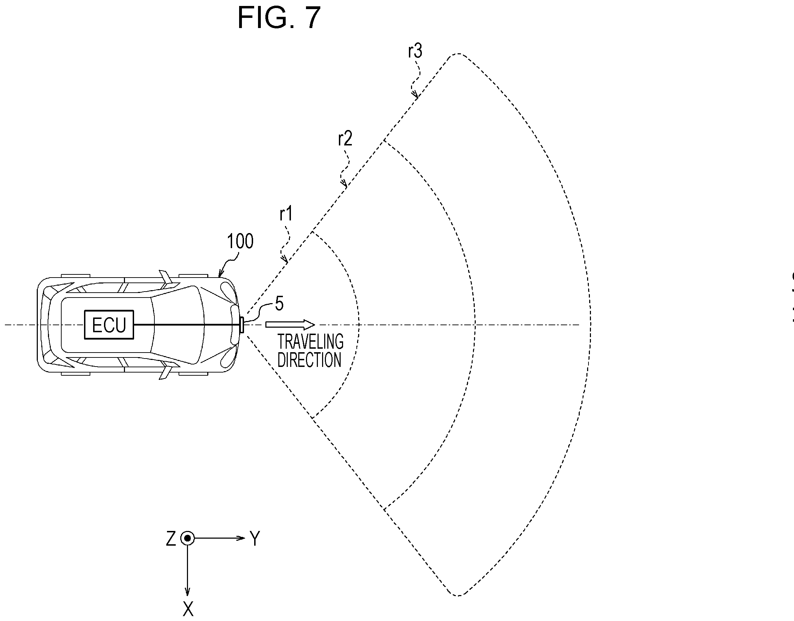

Fig. 7 is a diagram illustrating types of a detection distance of a radar implemented by the electronic device 1 according to the first embodiment.

As described above, the electronic device 1 according to the first embodiment is capable of clipping the object detection range and/or performing beamforming of the transmission wave. By employing at least one of clipping of the object detection range and beamforming of the transmission wave, the electronic device 1 is capable of defining a distance range in which an object can be detected on the basis of the transmission signal and the reception signal.

As illustrated in Fig. 7, the electronic device 1 according to the first embodiment is capable of performing detection of an object in a range r1, for example. The range r1 illustrated in Fig. 7 may be a range in which detection of an object can be performed by an ultra-short range radar (USRR), for example. As illustrated in Fig. 7, the electronic device 1 according to the first embodiment is capable of performing detection of an object in a range r2, for example. The range r2 illustrated in Fig. 7 may be a range in which detection of an object can be performed by a short-range radar (SRR), for example. As illustrated in Fig. 7, the electronic device 1 according to the first embodiment is capable of performing detection of an object in a range r3, for example. The range r3 illustrated in Fig. 7 may be a range in which detection of an object can be performed by a mid-range radar (MRR), for example. As described above, the electronic device 1 according to the first embodiment is capable of performing detection of an object by appropriately switching the range to any of the range r1, the range r2, and the range r3, for example. In such radars having different detection distances, the distance measurement accuracy tends to decrease as the detection distance increases.

As described above, in the electronic device 1 according to the first embodiment, the controller 10 may set the distance range in which detection of an object is performed on the basis of the transmission signal and the reception signal, in accordance with any of the plurality of object detection ranges.

How the electronic device 1 according to the first embodiment sets any of the plurality of object detection ranges for each frame or the like of the transmission wave T is described next.

The electronic device 1 according to the first embodiment may store parameters that define various settings for clipping the object detection range in the storage unit 40, for example. The electronic device 1 according to the first embodiment may also store parameters that define various settings for performing beamforming toward the object detection range in the storage unit 40, for example. The electronic device 1 according to the first embodiment may further store parameters that define various settings for implementing the type of the detection distance of the radar as illustrated in Fig. 7 in the storage unit 40, for example.

The electronic device 1 according to the first embodiment sets (allocates) an operation for implementing functions of a plurality of types of radars, for each small time section such as a frame of the transmission wave T, for example. For example, description is given below of setting of the operation for implementing functions of three different types of radars for each small time section such as a frame of the transmission wave T.

The three types of radars are hereinafter referred to as a "radar 1", a "radar 2", and a "radar 3" for the sake of convenience. These "radar 1", "radar 2", and "radar 3" are distinguished from one another on the basis of parameters that define operations for implementing functions of the different radars. That is, the "radar 1", the "radar 2", and the "radar 3" may be radars having object detection ranges different from one another. These different types of radars may be defined by different parameters, for example. The "radar 1", the "radar 2", and the "radar 3" may be radars in which whether or not to perform beamforming and a direction of beamforming when beamforming is performed are different from one another. These different types of radars may also be defined by different parameters, for example. The "radar 1", the "radar 2", and the "radar 3" may be radars whose types of the detection distance of the radar as illustrated in Fig. 7 are different from one another. These different types of radars may also be defined by different parameters, for example.

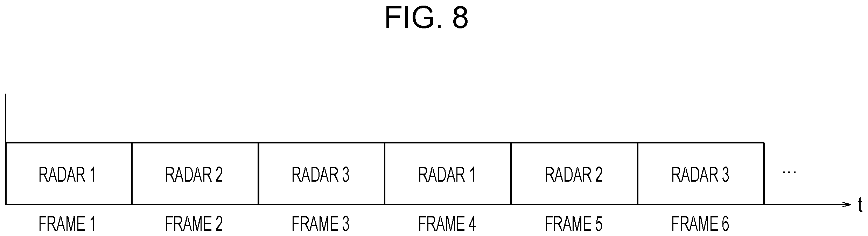

Figs. 8 to 10 are diagrams illustrating how functions of the different types of radars are set (allocated) for each frame or the like of the transmission wave T.

Fig. 8 is a diagram illustrating frames of the transmission wave T as in Fig. 3. In the example illustrated in Fig. 8, frames 1 to 6 of the transmission wave T are illustrated but frames may follow thereafter. Each frame illustrated in Fig. 8 may include, for example, 16 subframes as in the frame 1 illustrated in Fig. 3. In this case, each of these subframes may include, for example, eight chirp signals as in each subframe illustrated in Fig. 3.

For example, as illustrated in Fig. 8, the electronic device 1 according to the first embodiment may set (allocate) functions of different radars for each frame of the transmission wave T. For example, the electronic device 1 according to the first embodiment may set any of the plurality of object detection ranges for each frame of the transmission wave T, for example. As described above, in the electronic device 1 according to the first embodiment, the controller 10 may set any of the plurality of object detection ranges for each frame of the transmission wave T. In the electronic device 1 according to the first embodiment, the controller 10 may switch between the plurality of object detection ranges for each frame of the transmission wave T and may transmit the transmission signal and receive the reception signal. In the example illustrated in Fig. 8, the function of the radar 1 is set for the frame 1 of the transmission wave T, the function of the radar 2 is set for the frame 2 of the transmission wave T, and the function of the radar 3 is set for the frame 3 of the transmission wave T. The functions are repeatedly set in the same and/or similar manner thereafter. In the first embodiment, each frame of the transmission wave T may be on an order of several tens of microseconds, for example. Thus, the electronic device 1 according to the first embodiment functions as a different radar for each very short time. Therefore, the electronic device 1 according to the first embodiment operates as if a plurality of functions or use purposes were simultaneously implemented by one radar sensor.

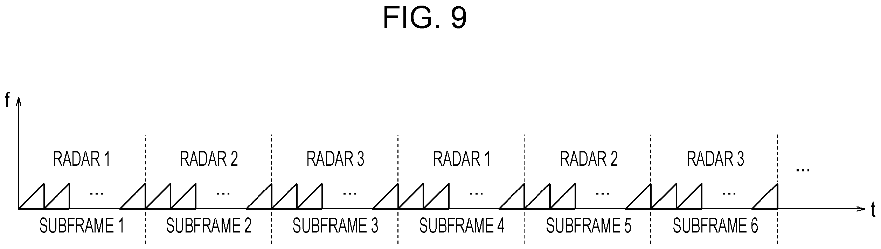

Fig. 9 is a diagram illustrating subframes included in a frame of the transmission wave T as in Fig. 3. In the example illustrated in Fig. 9, subframes 1 to 6 of the transmission wave T are illustrated but subframes may follow thereafter. The subframe 1 to 6 illustrated in Fig. 9 may constitute part of the 16 subframes included in the frame 1 illustrated in Fig. 3. Each of the subframes illustrated in Fig. 9 may include, for example, eight chirp signals as in each subframe illustrated in Fig. 3.

For example, as illustrated in Fig. 9, the electronic device 1 according to the first embodiment may set (allocate) functions of different radars for each subframe of the transmission wave T. For example, the electronic device 1 according to the first embodiment may set any of a plurality of object detection ranges for each subframe of the transmission wave T, for example. As described above, in the electronic device 1 according to the first embodiment, the controller 10 may set any of the plurality of object detection ranges based on the transmission signal and the reception signal for each part (for example, each subframe) constituting a frame of the transmission wave T. In the example illustrated in Fig. 9, the function of the radar 1 is set for the subframe 1 of the transmission wave T, the function of the radar 2 is set for the subframe 2 of the transmission wave T, and the function of the radar 3 is set for the subframe 3 of the transmission wave T. The functions are repeatedly set in the same and/or similar manner thereafter. In the first embodiment, each subframe of the transmission wave T may be shorter than the time of one frame, for example. Therefore, the electronic device 1 according to the first embodiment functions as a different radar for each shorter time. Therefore, the electronic device 1 according to the first embodiment operates as if a plurality of functions or use purposes were simultaneously implemented by one radar sensor.

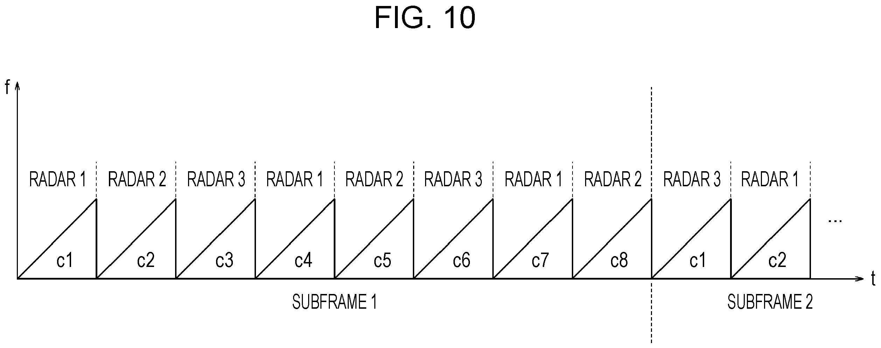

Fig. 10 is a diagram illustrating chirp signals included in a subframe of the transmission wave T as in Fig. 3. In the example illustrated in Fig. 10, the subframe 1 and part of the subframe 2 of the transmission wave T are illustrated but subframes subsequent to the subframe 1 may also follow in the same and/or similar manner as the subframe 1. The subframe 1 illustrated in Fig. 10 may include eight chirp signals as in the subframe 1 illustrated in Fig. 3. Each chirp signal illustrated in Fig. 10 may be the same as each of the eight chirp signals included in each subframe illustrated in Fig. 3.

For example, as illustrated in Fig. 10, the electronic device 1 according to the first embodiment may set (allocate) functions of different radars for each chirp signal included in a subframe of the transmission wave T. For example, the electronic device 1 according to the first embodiment may set any of a plurality of object detection ranges for each chirp signal of the transmission wave T, for example. As described above, in the electronic device 1 according to the first embodiment, the controller 10 may set any of the plurality of object detection ranges based on the transmission signal and the reception signal for each chirp signal constituting a frame of the transmission wave T. In the example illustrated in Fig. 10, the function of the radar 1 is set for the chirp signal c1 of the transmission wave T, the function of the radar 2 is set for the chirp signal c2 of the transmission wave T, and the function of the radar 3 is set for the chirp signal c3 of the transmission wave T. The functions are repeatedly set in the same and/or similar manner thereafter. In the first embodiment, each chirp signal of the transmission wave T may be shorter than the time of one subframe, for example. Therefore, the electronic device 1 according to the first embodiment functions as a different radar for each shorter time. Therefore, the electronic device 1 according to the first embodiment operates as if a plurality of functions or use purposes were simultaneously implemented by one radar sensor.

As described above, the electronic device 1 according to the first embodiment is capable of clipping a detection range and performing beamforming toward a direction of the clipped detection range depending on various use purposes or functions. The electronic device 1 according to the first embodiment is capable of switching between clipping of the detection range and beamforming toward the direction of the clipped detection range in any manner. Thus, one radar sensor can be used, for example, by dynamically switching between a plurality of use purposes or functions. Therefore, the electronic device 1 according to the first embodiment can improve the convenience in detection of an object. The electronic device 1 according to the first embodiment not only enables highly accurate object detection but also is extremely advantageous from the viewpoint of cost.

The electronic device 1 according to the first embodiment is capable of changing the use purpose and the function of one sensor by appropriately changing the direction of the beam of the transmission waves transmitted from the plurality of transmission antennas or by switching the object detection range. Since the electronic device 1 according to the first embodiment is capable of performing detection only in a particular portion in a range in which the transmission wave T is transmitted, an increase in the amount of information to be processed is suppressed. Since the electronic device 1 according to the first embodiment also reduces a possibility of erroneously detecting an unnecessary object as a target object, the reliability of detection can improve.

The electronic device 1 according to the first embodiment can detect an object by causing the one sensor 5 to function as a plurality of sensors. Thus, with the electronic device 1 according to the first embodiment, a weight of the vehicle (in particular, harness) does not increase. Therefore, the electronic device 1 according to the first embodiment can avoid a decrease in fuel efficiency due to an increase in the number of sensors 5 or a decrease in fuel efficiency due to an increase in power consumption.

The electronic device 1 according to the first embodiment enables functions of a plurality of radar sensors to be integrated into one. Thus, delays that can occur between the plurality of sensors may also be avoided. Therefore, when automated driving, driving assist, or the like is performed, inconvenience that processing may take time can be avoided. With the electronic device 1 according to the first embodiment, complicated control that can occur when detection is performed by using a plurality of sensors having different object detection ranges is avoided.

When detection of an object is performed in a plurality of object detection ranges, the detection can be performed by using a plurality of sensors each having a unique object detection range in the related art. However, in the related art, it is difficult to accurately detect an object located at a short distance and detect an object located far at the same time by using one sensor, for example.

In contrast, the electronic device 1 according to the first embodiment is capable of performing detection of an object in a plurality of object detection ranges by using one sensor. The electronic device 1 according to the first embodiment can operate as if detection of an object were performed simultaneously in a plurality of object detection ranges.

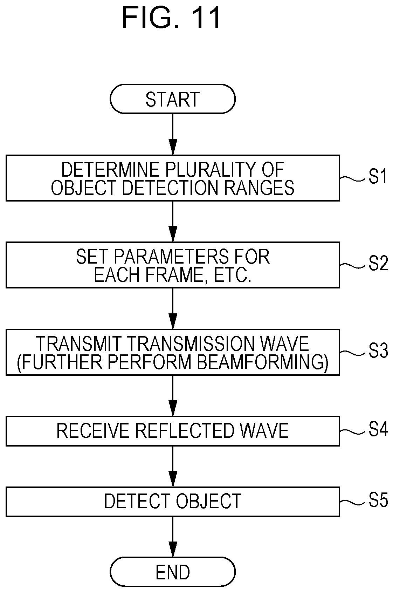

Fig. 11 is a flowchart for describing an operation of the electronic device according to the first embodiment. The flow of the operation of the electronic device according to the first embodiment is described below.

The operation illustrated in Fig. 11 may be started, for example, when the electronic device 1 mounted in the mobility device 100 attempts to detect an object located around the mobility device 100.

In response to the start of the operation illustrated in Fig. 11, the detection range determining unit 15 of the controller 10 determines a plurality of object detection ranges to be switched between for use (step S1). For example, in step S1, the detection range determining unit 15 may determine a plurality of ranges among the object detection ranges (1) to (4) illustrated in Fig. 4 as the object detection ranges. In step S1, the detection range determining unit 15 may determine a plurality of object detection ranges on the basis of, for example, an operation performed by a driver or the like of the mobility device 100, or may determine a plurality of object detection ranges on the basis of, for example, an instruction from the controller 10, the ECU 50, or the like.

The operation in step S1 may be restarted after the operation illustrated in Fig. 11 is already performed before, instead of the operation being performed for the first time after the start of the operation illustrated in Fig. 11. If there is a result indicating that an object has already been detected by the object detecting unit 14 at the time when step S1 is performed again, the detection range determining unit 15 may determine a plurality of object detection ranges on the basis of a location of the detected object.

After the plurality of object detection ranges are determined in step S1, the parameter setting unit 16 sets various parameters in the electronic device 1 for each frame or the like of the transmission wave T in order to detect an object in the plurality of determined object detection ranges (step S2). For example, in step S2, the parameter setting unit 16 sets various parameters for each frame or the like of the transmission wave T such that a plurality of ranges among the object detection ranges (1) to (4) illustrated in Fig. 4 are clipped as object detection ranges and detection of an object is performed. In step S2, as illustrated in Figs. 8 and 9, various parameters may be set for each frame of the transmission wave T, may be set for each part (for example, for each subframe) constituting a frame, or may be set for each chirp signal. Various parameters set for clipping a detection range such as each object detection range and performing detection of an object can be stored in the storage unit 40, for example. In this case, in step S2, the parameter setting unit 16 may read the various parameters from the storage unit 40 and set the various parameters. In step S2, the parameter setting unit 16 may set the various parameters in the object detecting unit 14, for example.

In step S2, the parameter setting unit 16 may set various parameters for each frame or the like of the transmission wave T such that the beam of the transmission wave is formed in the direction toward each of the determined object detection ranges. For example, in step S2, the parameter setting unit 16 sets various parameters for each frame or the like of the transmission wave T such that the beam of the transmission wave is directed toward the object detection ranges determined in step S1. The various parameters set for directing the beam of the transmission wave toward the detection range such as each object detection range can be stored in the storage unit 40, for example. In this case, in step S2, the parameter setting unit 16 may read the various parameters from the storage unit 40 and set the various parameters. In step S2, the parameter setting unit 16 may set the various parameters for each frame or the like of the transmission wave T, for example, in the phase control units 23 (the transmission control unit) or the transmitter 20.

As described above, in the electronic device 1 according to the first embodiment, the parameter setting unit 16 of the controller 10 may set parameters that define any of the plurality of object detection ranges based on the transmission signal and the reception signal for each frame or the like of the transmission wave T. The parameter setting unit 16 may switch the type of the radar for each frame or for each processing unit in a frame from among the types of radars having different detection ranges and may notify the signal generating unit 21 of the type of radar.

After the parameters are set in step S2, the controller 10 performs control such that the transmission antennas 25 transmit the transmission wave T in accordance with an order of the frames or the like of the transmission wave T (step S3). For example, in step S3, the signal generating unit 21 may generate a transmission signal that functions as each type of radar in accordance with an order of frames or the like of the transmission wave T on the basis of the parameters set by the parameter setting unit 16. When beamforming of the transmission wave T is performed, in step S3, each of the phase control units 23 (the transmission control unit) performs control such that a respective one of the transmission waves T transmitted from the plurality of transmission antennas 25 forms a beam in a predetermined direction in accordance with the order of frames or the like of the transmission wave T. In this case, the phase control unit 23 (the transmission control unit) may control the phase of each transmission wave T. The phase control unit 23 (the transmission control unit) may perform control so as to direct the beam of the transmission wave T in the direction toward the object detection range determined in step S1 in accordance with the order of the frames or the like of the transmission wave T such that at least part of the object detection range is covered, for example.

After the transmission wave T is transmitted in step S3, the controller 10 performs control to receive the reflected wave R from the reception antenna 31 (step S4).

When the reflected wave R is received in step S4, the controller 10 detects an object located around the mobility device 100 (step S5). In step S5, the object detecting unit 14 of the controller 10 may perform detection of an object in the object detection ranges determined in step S1 (clipping of the object detection range). In step S5, the object detecting unit 14 of the controller 10 may detect the presence of an object on the basis of an estimation result obtained by at least any of the distance FFT processing unit 11, the velocity FFT processing unit 12, and the angle-of-arrival estimating unit 13.

In the electronic device 1 according to the first embodiment, the object detecting unit 14 of the controller 10 may perform, for example, object detection (for example, clustering) processing from angle information, velocity information, and distance information obtained for each of a plurality of different types of radars and may calculate average power of points constituting the object. In the electronic device 1 according to the first embodiment, the object detecting unit 14 may notify an upper-level control CPU such as the ECU 50, for example, of object detection information or point cloud information obtained for each of the plurality of different types of radars.

Since detection of an object in step S5 can be performed on the basis of various algorithms or the like by using a known technology of a millimeter wave radar, more detailed description is omitted. After step S5 illustrated in Fig. 11, the controller 10 may start the processing of step S1 again. In this case, the object detection ranges may be determined in step S1 on the basis of the result of detecting the object in step S5. As described above, in the electronic device 1 according to the first embodiment, the controller 10 may detect an object that reflects the transmission wave T on the basis of the transmission signal transmitted as the transmission wave T and the reception signal received as the reflected wave R.

In the first embodiment described above, any of a plurality of ranges in which an object is detected on the basis of the transmission signal and the reception signal is set, for example, for each frame, each subframe, or each chirp signal. On the other hand, in the first embodiment, for example, in a frame or a subframe, at least any of a plurality of ranges in which an object is detected on the basis of a transmission signal and a reception signal may be set with a higher degree of freedom. Such an embodiment is described below.

In the first embodiment illustrated in Fig. 10, functions of different radars are set (allocated) for each chirp signal included in a subframe of the transmission wave T. In Fig. 10, the function of the radar 1 is set for the chirp signal c1, the function of the radar 2 is set for the chirp signal c2, and the function of the radar 3 is set for the chirp signal c3. The functions are repeatedly set in the same and/or similar manner thereafter. In the example illustrated in Fig. 10, all the chirp signals have the same time length. In the example illustrated in Fig. 10, all the chirp signals have the same maximum frequency. Therefore, all the chirp signals also have the same frequency gradient. In the example illustrated in Fig. 10, the chirp signals are arranged in a subframe or a frame without any gap therebetween, that is, without any time interval therebetween. However, in the first embodiment, when functions of different radars are allocated to each chirp signal, the chirp signals are not necessarily arranged as in the example illustrated in Fig. 10.

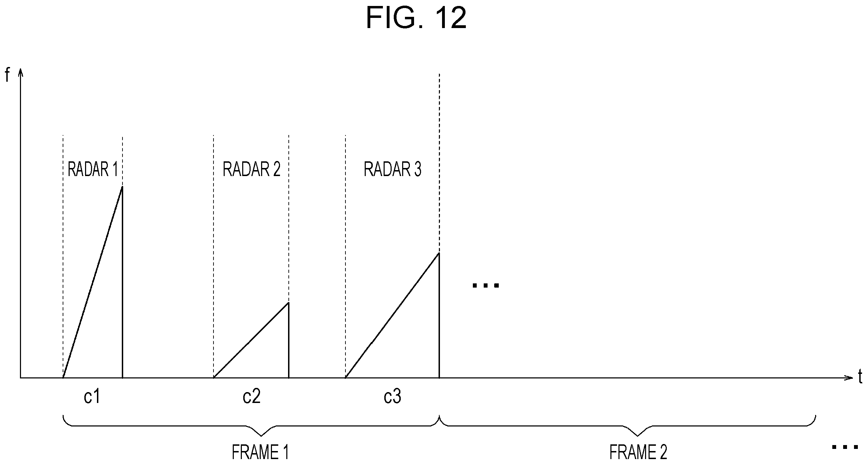

Fig. 12 is a diagram illustrating an example in which the electronic device 1 according to a second embodiment sets object detection ranges in a frame. As illustrated in Fig. 12, the controller 10 of the electronic device according to the first embodiment may arrange different chirp signals in a frame, for example. In Fig. 12, as in Fig. 10, the function of the radar 1 is set for the chirp signal c1, the function of the radar 2 is set for the chirp signal c2, and the function of the radar 3 is set for the chirp signal c3. On the other hand, in Fig. 12, the chirp signals are arranged with a gap therebetween, that is, with a time interval therebetween. In particular, in Fig. 12, the chirp signal c1 does not start from the beginning of the frame 1. In the example illustrated in Fig. 12, all the chirp signals do not have the same time length. In the example illustrated in Fig. 12, all the chirp signals do not have the same maximum frequency. Therefore, all the chirp signals do not have the same frequency gradient. Each of the chirp signals illustrated in Fig. 12 is illustrative. In the electronic device 1 according to the first embodiment, chirp signals having any lengths and any frequency bands may be appropriately arranged in each frame.

In the example illustrated in Fig. 12, the same and/or similar arrangement of chirp signals as in the frame 1 may be repeated in the frame 2 and subsequent frames, or chirp signals may be arranged in the frame 2 and subsequent frames differently from those in the frame 1. In the example illustrated in Fig. 12, the arrangements of the chirp signals in the frame 2 and the subsequent frames may be different from one another.

Among the chirp signals in the frame 1 illustrated in Fig. 12, the chirp signal c1 has the highest maximum frequency and the chirp signal c2 has the lowest maximum frequency. Among the chirp signals in the frame 1 illustrated in Fig. 12, the time of the chirp signal c1 is relatively short, and the times of the chirp signal c2 and the chirp signal c3 are relatively long. When the time of the chirp signal increases, the power increases by the corresponding amount, so that the accuracy in detection of an object can improve. When the frequency band of the chirp signal widens, the accuracy in detection of an object can also improve.

As described above, the controller 10 of the electronic device 1 according to the first embodiment may set at least any of a plurality of ranges in which an object is detected on the basis of a transmission signal and a reception signal in a frame of the transmission wave. As described above, in the first embodiment, at least any of a plurality of ranges in which an object is detected may be set, for example, in a frame or a subframe with a higher degree of freedom. Fig. 12 illustrates an example in which at least any of a plurality of ranges in which an object is detected is set in each frame with a degree of freedom. On the other hand, the controller 10 of the electronic device 1 according to the first embodiment may set at least any of a plurality of ranges in which an object is detected in each subframe with a degree of freedom.

### (Second Embodiment)

An electronic device according to a second embodiment is described next. The electronic device according to the second embodiment performs calibration of a transmission wave on the basis of a transmission signal and a reception signal.

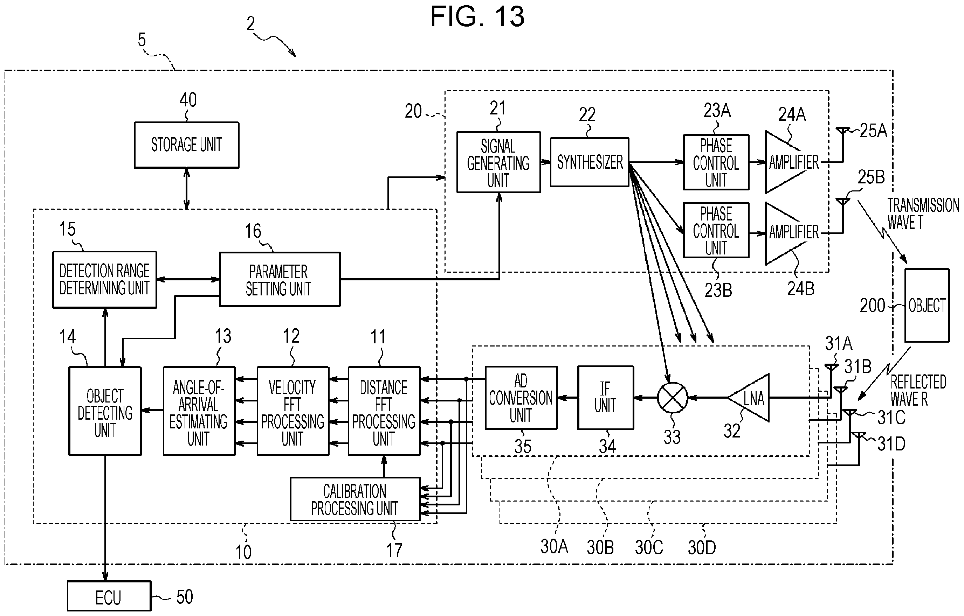

Fig. 13 is a functional block diagram schematically illustrating an example of a configuration of the electronic device according to the second embodiment. An example of the configuration of the electronic device according to the second embodiment is described below.

As illustrated in Fig. 13, an electronic device 2 according to the second embodiment may have the same configuration as the electronic device 1 according to the first embodiment illustrated in Fig. 2 except for part thereof. That is, as illustrated in Fig. 13, the electronic device 2 according to the second embodiment is the electronic device 1 illustrated in Fig. 2 to which a calibration processing unit 17 is added. Therefore, description that is the same as or similar to the description in Fig. 2 is appropriately simplified or omitted below.

The calibration processing unit 17 performs calibration processing on the basis of a beat signal digitized by the AD conversion unit 35. That is, the calibration processing unit 17 performs calibration of a transmission wave on the basis of a transmission signal and a reception signal. The signal on which the calibration processing unit 17 has performed the calibration processing may be supplied to the distance FFT processing unit 11.

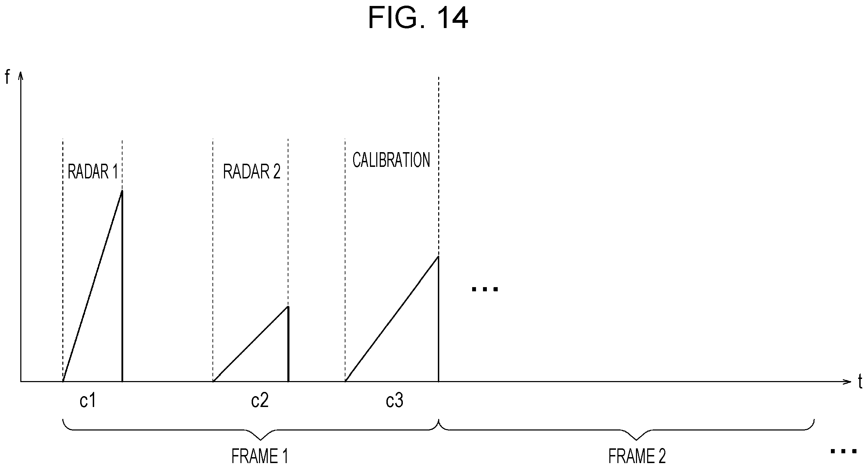

Fig. 14 is a diagram illustrating a configuration of frames in the second embodiment.

Fig. 14 is a diagram for describing an example in which the electronic device 2 according to the second embodiment sets a chirp signal for use in calibration in a frame together with chirp signals for object detection ranges. As illustrated in Fig. 14, the controller 10 of the electronic device 2 according to the second embodiment may arrange different chirp signals in a frame, for example. In Fig. 14, the function of the radar 1 is set for the chirp signal c1, and the function of the radar 2 is set for the chirp signal c2. In Fig. 14, the chirp signal c3 is allocated as the chirp signal for used in calibration. Each of the chirp signals illustrated in Fig. 14 is illustrative. The electronic device 1 according to the second embodiment may appropriately arrange chirp signals having any lengths and any frequency bands in each frame.

For example, in Fig. 14, the chirp signal c3 for use in calibration may be arranged at any position in the frame. The chirp signal c3 for use in calibration may have any length. The chirp signal c3 for use in calibration may have any maximum frequency. Therefore, the chirp signal c3 for use in calibration may have any frequency gradient.

In the example illustrated in Fig. 14, only one chirp signal c3 for use in calibration is illustrated. However, the number of chirp signals c3 for use in calibration may be any number in each frame. For example, in the example illustrated in Fig. 14, two or more chirp signals for use in calibration may be arranged in the frame 1. In the example in the example illustrated in Fig. 14, no chirp signal for use in calibration may be arranged in the frame 1 and the chirp signal for use in calibration may be arranged in the frame 2 and subsequent frames.

When the sensor 5 is required to have high measurement accuracy, a relatively large number of chirp signals for use in calibration may be included. On the other hand, when the sensor 5 is not required to have so high measurement accuracy, a relatively small number of chirp signals for use in calibration may be included. For example, the chirp signal for use in calibration may be arranged in every other frame. The chirp signal for use in calibration may be arranged at any frame interval such as every five frames or every ten frames, for example. The chirp signal for use in calibration may be arranged at random frame intervals instead of being arranged regularly such as every predetermined five frames.

In the example illustrated in Fig. 14, the same and/or similar arrangement of chirp signals as in the frame 1 may be repeated in the frame 2 and subsequent frames, or chirp signals different from those in the frame 1 may be arranged in the frame 2 and subsequent frames. In the example illustrated in Fig. 14, the arrangements of the chirp signals in the frame 2 and the subsequent frames may be different from one another.

As described above, the controller 10 of the electronic device 2 according to the second embodiment includes the chirp signal for performing the calibration processing in a frame or a subframe. That is, the controller 10 of the electronic device 2 arranges (allocates) a chirp signal for performing calibration processing (a signal for use in calibration) in a frame or a subframe. The controller 10 of the electronic device 2 performs calibration by using the signal included in the frame or the subframe.

As described above, a common radar sensor has a function of calculating at least any of a distance, a relative velocity, and an angle of an object that is a detection target. On the other hand, a common radar sensor has factors that may result in an error described below. For example, an error may occur in the distance due to a position where the radar sensor is mounted (an attached depth from a vehicle surface) and/or a deviation of a clock frequency inside the radar sensor. An error may occur in the relative velocity due to an error of a speedometer of the vehicle and/or an error due to a deviation of a clock frequency inside the radar sensor. An error may occur in the angle due to a deviation of an angle at which the radar sensor is mounted and/or due to a deviation in the shape/spacing of the antennas at the time of manufacturing.

The error in the angle is further described below as an example. The angle detected by the radar sensor is calculated with reference to an angle at which the radar sensor is attached to the vehicle. For example, it is assumed that the radar sensor has an attachment angle of 5 degrees from a reference angle of the vehicle, and a result of estimating the angle by the radar sensor is 10 degrees from the reference angle of the vehicle. In this case, the radar sensor recognizes that the angle of the object is detected in the direction of 15 degrees with respect to the vehicle. On the other hand, for example, it is assumed that the radar sensor has an attachment angle of 7 degrees from the reference angle of the vehicle, and a result of estimating the angle by the radar sensor is 10 degrees from the reference angle of the vehicle. In this case, the radar sensor recognizes that the angle of the object is detected in a direction of 17 degrees with respect to the vehicle. Such a deviation in the attachment angle is difficult to completely eliminate and basically involves an initial deviation and/or an aging deviation.

Accordingly, in order to reduce the influence of the deviation, the electronic device 2 according to the second embodiment performs, for example, calibration processing during operation. The calibration processing performed by the calibration processing unit 17 may be, for example, a correction function for maintaining the accuracy of the object detection function of the electronic device 2 high. The aforementioned calibration processing is now described.

Detecting an object having a risk of collision while a mobility device such as a vehicle equipped with the radar is traveling is often a main purpose of a radar such as the sensor 5. However, the radar such as the sensor 5 can also detect an object, such as a guardrail or a utility pole, having a relatively low risk of collision while the mobility device is traveling. When the radar detects these objects, the objects are recognized as objects moving in a direction that is the same direction as the moving direction of the mobility device and is opposite to the moving direction.

Accordingly, the electronic device 2 according to the second embodiment performs calibration by using the chirp signal c3 illustrated in Fig. 14, for example. Specifically, the electronic device 2 transmits a transmission wave such as the chirp signal c3 illustrated in Fig. 14 from the transmission antenna 25, and receives a reflected wave having reflected off, for example, a guardrail from the reception antenna 31. The calibration processing unit 17 may compare a beat signal digitized by the AD conversion unit 35 with information on a known object (guardrail) stored in the storage unit 40. The calibration processing unit 17 may perform comparison with a trajectory (known data) of an object supposed to be detected, in consideration of the attachment angle of the transmission antenna 25 (and the reception antenna 31) in the sensor 5. On the basis of such a comparison result, the calibration processing unit 17 may correct various parameters for use in various kinds of processing.

In the electronic device 2 according to the second embodiment, for example, a predetermined reflector or the like may be installed, for example, in a radar cover, a housing of the sensor 5, or the like. At least information such as a position and/or an angle at which the predetermined reflector is installed and a reflectance of a material constituting the reflector may be stored in the storage unit 40 in advance. In this case, the electronic device 2 according to the second embodiment transmits a transmission wave such as the chirp signal c3 illustrated in Fig. 14 from the transmission antenna 25 and receives a reflected wave having reflected off the predetermined reflector from the reception antenna 31. The calibration processing unit 17 may compare a beat signal digitized by the AD conversion unit 35 with information on a known object (predetermined reflector) stored in the storage unit 40. The calibration processing unit 17 may perform comparison with a trajectory (known data) of an object supposed to be detected, in consideration of the attachment angle of the transmission antenna 25 (and the reception antenna 31) in the sensor 5. On the basis of such a comparison result, the calibration processing unit 17 may correct various parameters for use in various kinds of processing.

In this manner, the electronic device 2 according to the second embodiment may perform the calibration processing within a time of one frame, for example. The electronic device 2 according to the second embodiment may perform the calibration processing within a time of each frame or each subframe, for example. When the calibration processing is repeatedly performed in this manner, various kinds of statistical processing such as averaging the individual processing results may be performed. With such statistical processing, the accuracy of detection performed by the radar function of the electronic device 2 can be expectedly increased gradually by repeatedly performing the calibration processing. When such statistical processing is performed, a detection result that can be regarded as noise may be excluded.

As described above, in the electronic device 2 according to the second embodiment, the controller 10 sets, in a frame of a transmission wave, at least any of a plurality of ranges in which an object is detected on the basis of a transmission signal and a reception signal. In the electronic device 2 according to the second embodiment, the controller 10 may include a signal for use in calibration in the frame. In the electronic device 2 according to the second embodiment, the controller 10 may perform calibration by using the signal included in the frame.

The electronic device 2 according to the second embodiment performs calibration while performing detection by using a radar even if a deviation is caused in the attachment angle when the sensor 5 is attached to the mobility device, for example. Thus, the electronic device 2 according to the second embodiment can correct an error due to the deviation. The electronic device 2 according to the second embodiment performs calibration while performing detection by using a radar even if a deviation is caused due to aging deterioration or the like of the sensor 5, for example. Thus, the electronic device 2 according to the second embodiment can correct an error due to the deviation.

In the second embodiment described above, the description has been given on the assumption that the angle of arrival θ on a plane (for example, on an XY plane illustrated in Fig. 1) is calibrated through the calibration processing performed by the electronic device 2. That is, the electronic device 2 can calibrate the attachment angle of the transmission antenna 25 (and the reception antenna 31) in the sensor 5 on the basis of the detected angle of arrival θ. However, in the second embodiment, the electronic device 2 may perform another calibration. For example, in the second embodiment, the electronic device 2 may calibrate the attachment angle in the vertical direction (for example, the Z-axis direction illustrated in Fig. 1) of the transmission antenna 25 (and the reception antenna 31) in the sensor 5. If possible, the electronic device 2 according to the second embodiment may perform calibration on the basis of, for example, a location of the detected object and/or a relative velocity of the detected object. For example, in the second embodiment, the electronic device 2 may calibrate the power of the transmission wave transmitted from the transmission antenna 25.

### (Third Embodiment)

An electronic device according to a third embodiment is described next.

An electronic device according to the third embodiment may have the same and/or similar configuration as the electronic device 1 according to the first embodiment illustrated in Fig. 2 or the electronic device 1 according to the second embodiment illustrated in Fig. 13. Therefore, description that is the same as or similar to the description in Fig. 2 or Fig. 13 is appropriately simplified or omitted below.

In the first embodiment and the second embodiment described above, the description has been given on the assumption that one or more frames (or subframes or the like) are set as a unit and the unit is sequentially repeated. For example, in the example illustrated in Fig. 8, three frames (the frames 1 to 3) are set as a unit, and the first three frames may be sequentially repeated subsequently to the first three frames. In the example illustrated in Fig. 9, three subframes (the subframes 1 to 3) are set as a unit, and the first three subframes may be sequentially repeated subsequently to the first three subframes. In the example illustrated in Fig. 10, three chirp signals (the chirp signals c1 to c3) are set as a unit, and the first three chirp signals may be sequentially repeated subsequently to the first three chirp signals. In the examples illustrated in Figs. 12 and 14, one frame including three chirp signals (the chirp signals c1 to c3) is set as a unit, and the first frame may be sequentially repeated subsequently to the first frame.

In contrast, the electronic device according to the third embodiment is capable of configuring a transmission signal differently in different frames. That is, the controller 10 configures a transmission signal in a second frame among a plurality of frames of a transmission wave transmitted by the transmission antenna 25 differently from a transmission signal in a first frame among the plurality of frames. Specifically, the transmission signal may be, for example, a chirp signal. That is, the controller 10 may configure the chirp signal in the second frame differently from the chirp signal in the first frame. The first frame may be the starting frame among the plurality of frames or may be any frame among the plurality of frames. The first frame and the second frame may be, for example, consecutive frames such as the frame 1 and the frame 2. The first frame and the second frame may be, for example, non-consecutive frames such as the frame 1 and the frame 10. The first frame is a frame preceding the second frame, and the second frame is a frame following the first frame. However, the order may be reversed.

How the controller 10 of the electronic device according to the third embodiment configures frames of a transmission wave is described below.

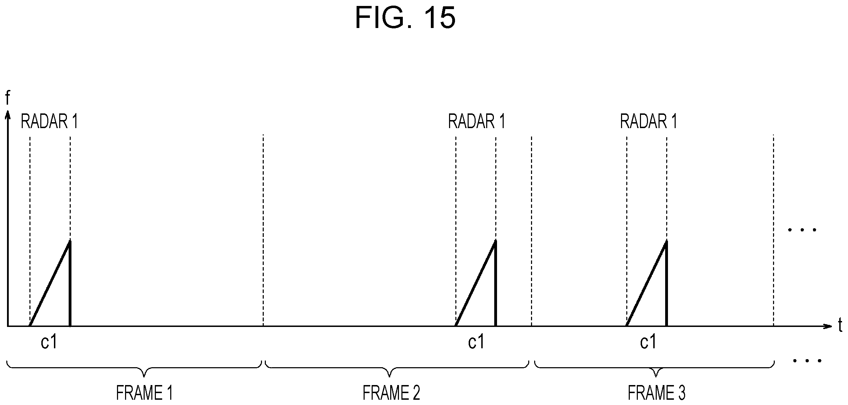

Fig. 15 is a diagram illustrating an example of a configuration of frames in the third embodiment. That is, Fig. 15 is a diagram for describing an example in which an electronic device 1 according to the third embodiment sets an object detection range in frames. As illustrated in Fig. 15, the controller 10 of the electronic device according to the third embodiment may arrange a chirp signal differently in each frame, for example. In Fig. 15, the function of the radar 1 is set for the chirp signal c1. In Fig. 15, the chirp signals c1 are arranged with a gap therebetween, that is, with a time interval therebetween. On the other hand, as illustrated in Fig. 15, the timing at which transmission of the chirp signal c1 starts in each frame is different. Thus, the timing at which the transmission of the chirp signal c1 ends in each frame is also different. That is, the timings of the transmission signals (the chirp signals c1) in the frames 1 to 3 are different from one another.

In Fig. 15, the frames 1 to 3 may be repeated subsequently to the frame 3. In Fig. 15, the frame subsequent to the frame 3 may be a frame in which the chirp signal is configured at a timing different from the timings in the frames 1 to 3. In Fig. 15, the frame subsequent to the frame 3 may be a frame in which the chirp signal is configured at the same timing as the timing of any of the frames 1 to 3.

As described above, the controller 10 of the electronic device according to the third embodiment may set a timing of a transmission signal in the second frame differently from a timing of a transmission signal in the first frame.

The electronic device according to the third embodiment avoids transmitting a transmission signal having the same frequency at the same timing when transmitting a transmission wave in accordance with a plurality of frames. The controller 10 of the electronic device according to the third embodiment can set processing timings of respective signals different from one another by setting the timings of the transmission signals different between frames. Thus, for example, even if many mobility devices each equipped with the electronic device according to the third embodiment are traveling at a short distance from each other, interference caused by the transmission waves transmitted from the respective electronic devices is reduced. In the future, the number of mobility devices such as automobiles each equipped with a radar expectedly increases. Even in such a case, the electronic device according to the third embodiment can reduce interference with another radar. Therefore, the electronic device according to the third embodiment can reduce deterioration of characteristics due to an influence of interference with another radar.

Fig. 16 is a diagram illustrating another example of a configuration of frames in the third embodiment. As illustrated in Fig. 16, the controller 10 of the electronic device according to the third embodiment may arrange chirp signals in a different order in each frame, for example. In Fig. 16, the function of the radar 1 is set for the chirp signal c1, the function of the radar 2 is set for the chirp signal c2, and the function of the radar 3 is set for the chirp signal c3. In Fig. 16, the individual chirp signals c1, c2, and c3 are arranged with a gap therebetween, that is, with a time interval therebetween. Such an interval may be appropriately set or omitted. On the other hand, as illustrated in Fig. 16, the transmission order of the chirp signals c1, c2, and c3 is different in each frame. That is, the orders of transmission signals (the chirp signals c1, c2, and c3) in the frames 1 to 3 are different from one another.

As illustrated in Fig. 16, the chirp signals arranged in each frame in the third embodiment may be not only up-chirps such as the chirp signals c1 and c2 but also a down-chirp such as the chirp signal c3. This may also apply to the first and second embodiments described above.

In Fig. 16, the frames 1 to 3 may be repeated subsequently to the frame 3. In Fig. 16, the frame subsequent to the frame 3 may be a frame in which the chirp signals are configured in an order different from the orders in the frames 1 to 3. In Fig. 16, the frame subsequent to the frame 3 may be a frame in which the chirp signals are configured in the same order as the order in any of the frames 1 to 3.

As described above, the controller 10 of the electronic device according to the third embodiment may set an order of transmission signals in the second frame differently from an order of transmission signals in the first frame.

Also in this case, the electronic device according to the third embodiment avoids transmitting a transmission signal having the same frequency at the same timing when a transmission wave is transmitted in accordance with a plurality of frames. The controller 10 of the electronic device according to the third embodiment can set the processing orders of the transmission signals different from one another by setting the orders of the signals different between frames. Thus, the electronic device according to the third embodiment can reduce interference with another radar. Therefore, the electronic device according to the third embodiment can reduce deterioration of characteristics due to an influence of interference with another radar.

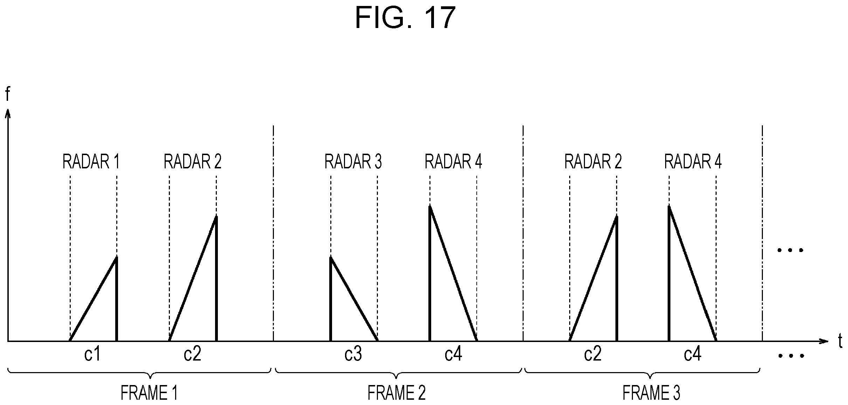

Fig. 17 is a diagram illustrating another example of a configuration of frames in the third embodiment. As illustrated in Fig. 17, the controller 10 of the electronic device according to the third embodiment may arrange chirp signals in a different combination in each frame, for example. In Fig. 17, the function of the radar 1 is set for the chirp signal c1, the function of the radar 2 is set for the chirp signal c2, the function of the radar 3 is set for the chirp signal c3, and a function of a radar 4 is set for the chirp signal c4. In Fig. 17, the individual chirp signals c1, c2, c3, and/or c4 are arranged with a gap therebetween, that is, with a time interval therebetween. Such an interval may be appropriately set or omitted. On the other hand, as illustrated in Fig. 17, the combination of the chirp signals c1, c2, c3, and/or c4 to be transmitted is different in each frame. That is, the combinations of transmission signals (the chirp signals c1, c2, c3, and/or c4) in the frames 1 to 3 are different from one another.

In Fig. 17, the frames 1 to 3 may be repeated subsequently to the frame 3. In Fig. 17, the frame subsequent to the frame 3 may be a frame in which the chirp signals are configured in a combination different from the combinations in the frames 1 to 3. In Fig. 17, the frame subsequent to the frame 3 may be a frame in which the chirp signals are configured in the same combination as the combination in any of the frames 1 to 3.

As described above, the controller 10 of the electronic device according to the third embodiment may set a combination of transmission signals in the second frame differently from a combination of transmission signals in the first frame.

Also in this case, the electronic device according to the third embodiment avoids transmitting a transmission signal having the same frequency at the same timing when a transmission wave is transmitted in accordance with a plurality of frames. The controller 10 of the electronic device according to the third embodiment can set the combinations of to-be-processed signals different from one another by setting the combinations of the transmission signals different between frames. Thus, the electronic device according to the third embodiment can reduce interference with another radar. Therefore, the electronic device according to the third embodiment can reduce deterioration of characteristics due to an influence of interference with another radar.

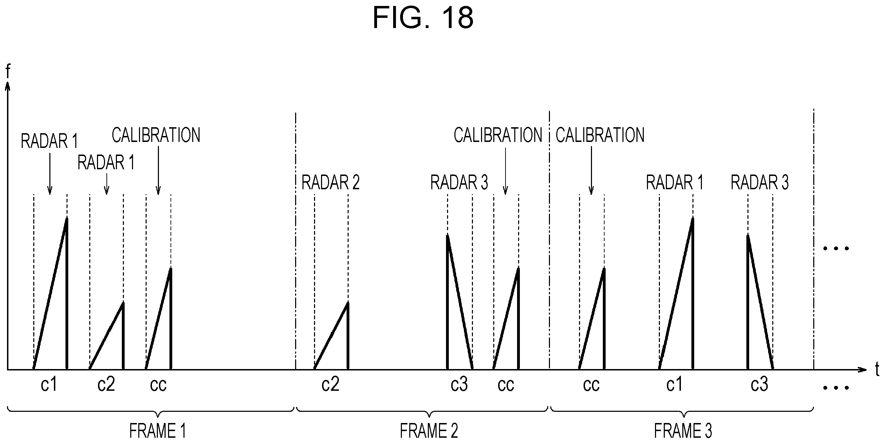

Fig. 18 is a diagram illustrating another example of a configuration of frames in the third embodiment. As illustrated in Fig. 18, the controller 10 of the electronic device according to the third embodiment may arrange the chirp signals at a different timing, in a different order, and/or in a different combination in each frame, for example. In Fig. 18, the function of the radar 1 is set for the chirp signal c1, the function of the radar 2 is set for the chirp signal c2, and the function of the radar 3 is set for the chirp signal c3. As illustrated in Fig. 18, the controller 10 of the electronic device according to the third embodiment may appropriately arrange a chirp signal for performing calibration processing (a signal for use in calibration) in each frame, similarly to the electronic device 2 according to the second embodiment.

In Fig. 18, the chirp signal for performing calibration processing (the signal for use in calibration) is illustrated as a calibration chirp signal cc. In Fig. 18, one calibration chirp signal cc is arranged in all frames from the frame 1 to the frame 3. However, the number of calibration chirp signals cc may be any number in each frame. For example, in the example illustrated in Fig. 18, two or more calibration chirp signals cc may be arranged in the frame 1. In the example illustrated in Fig. 18, no calibration chirp signal cc may be arranged in the frame 1 and the calibration chirp signal cc may be arranged in the frame 2 and subsequent frames.

In Fig. 18, the calibration chirp signal cc is arranged in all frames from the frame 1 to frame 3. However, for example, the calibration chirp signal cc may be arranged in every other frame. The calibration chirp signal cc may be arranged at any frame interval such as every five frames or every ten frames, for example. The calibration chirp signal cc may be arranged at random frame intervals instead of being arranged regularly such as every predetermined five frames.

In Fig. 18, the chirp signals c1, c2, and c3 and/or the calibration chirp signal cc are arranged with a gap therebetween, that is, with a time interval therebetween. Such an interval may be appropriately set or omitted. On the other hand, as illustrated in Fig. 18, the combination of the chirp signals c1, c2, and c3 and/or the calibration chirp signal cc to be transmitted is different in each frame. That is, the combinations of the transmission signals (the chirp signal c1, c2, and c3 and/or the calibration chirp signal cc) in the frames 1 to 3 are different from one another.

As illustrated in Fig. 18, in the frame 1, the chirp signals c1 and c2 and the calibration chirp signal cc are densely arranged in a temporally early region of the frame. In the frame 2, the chirp signal c2 is arranged in a temporally early region of the frame, and the chirp signal c3 and the calibration chirp signal cc are densely arranged in a temporally late region of the frame. In the frame 3, the calibration chirp signal cc and the chirp signals c1 and c3 are arranged at substantially equal time intervals in the frame.

In Fig. 18, the frames 1 to 3 may be repeated subsequently to the frame 3. In Fig. 18, the frame subsequent to the frame 3 may be a frame in which the chirp signals are configured in a combination different from the combinations in the frames 1 to 3. In Fig. 18, the frame subsequent to the frame 3 may be a frame in which the chirp signals are configured in the same combination as the combination in any of the frames 1 to 3.

As described above, the controller 10 of the electronic device according to the third embodiment may set a configuration of transmission signals in the second frame differently from a configuration of transmission signals in the first frame. The controller 10 of the electronic device according to the third embodiment may perform calibration by using a transmission signal included in at least any of a plurality of frames of a transmission wave.

Also in this case, the electronic device according to the third embodiment avoids transmitting a transmission signal having the same frequency at the same timing when a transmission wave is transmitted in accordance with a plurality of frames. Thus, the electronic device according to the third embodiment can reduce interference with another radar. Therefore, the electronic device according to the third embodiment can reduce deterioration of characteristics due to an influence of interference with another radar. The controller 10 of the electronic device according to the third embodiment can perform calibration by using a transmission signal included in at least any of a plurality of frames of a transmission wave. Therefore, the controller 10 of the electronic device according to the third embodiment can correct an error due to the initial deviation and/or the aging deviation in the same manner as the electronic device 2 according to the second embodiment.

The electronic device according to the third embodiment may configure a transmission signal differently in each frame. In this case, the electronic device according to the third embodiment may configure a transmission signal differently in each frame of a plurality of predetermined frames and then repeat the configuration of the transmission signal from to the first frame. On the other hand, the electronic device according to the third embodiment may configure the transmission signal differently in every predetermined number of frames. In this case, the electronic device according to the third embodiment may configure a transmission signal differently in every predetermined number of frames of a plurality of predetermined frames and then repeat the configuration of the transmission signal from to the first frame. The electronic device according to the third embodiment may insert a transmission signal having a different configuration in only one frame every predetermined number of frames having the same configuration. The electronic device according to the third embodiment may avoid a configuration in which all of the plurality of predetermined frames are the same. In short, the electronic device according to the third embodiment may avoid all the frames being configured in the same manner over a relatively long period.

While the present disclosure has been described on the basis of the various drawings and the embodiments, it should be noted that a person skilled in the art can easily make various variations or corrections on the basis of the present disclosure. Therefore, it should be noted that these variations or corrections are within the scope of the present disclosure. For example, functions and the like included in each functional unit can be rearranged without any logical contradiction. A plurality of functional units or the like may be combined into one or may be divided. The embodiments according to the present disclosure described above are not limited to being implemented strictly in accordance with the respective embodiments described above, and may be implemented by appropriately combining the features or omitting part thereof. That is, a person skilled in the art can make various variations and corrections to the contents of the present disclosure on the basis of the present disclosure. Accordingly, these variations and corrections are within the scope of the present disclosure. For example, in each embodiment, each functional unit, each means, each step, or the like can be added to another embodiment or replaced with each functional unit, each means, each step, or the like in another embodiment without any logical contradiction. In each embodiment, a plurality of functional units, means, steps, or the like may be combined to one or may be divided. The embodiments according to the present disclosure described above are not limited to being implemented strictly in accordance with the respective embodiments described above, and may be implemented by appropriately combining the features or omitting part thereof.

For example, in the embodiments described above, the description has been given of the configuration in which the object detection ranges are dynamically switched between by using the one sensor 5. However, in one embodiment, detection of an object may be performed in the determined object detection ranges by using the plurality of sensors 5. In one embodiment, beamforming may be performed toward the determined object detection ranges by using the plurality of sensors 5.

The embodiments described above are not limited to implementation as the electronic device 1. For example, the embodiments described above may be implemented as a method for controlling a device such as the electronic device 1. For example, the embodiments described above may be implemented as a program for controlling a device such as the electronic device 1.

The electronic device 1 according to one embodiment may include, as the minimum configuration, at least part of at least one of the sensor 5 and the controller 10, for example. On the other hand, the electronic device 1 according to one embodiment may appropriately include at least any of the signal generating unit 21, the synthesizer 22, the phase control units 23, the amplifiers 24, and the transmission antennas 25 as illustrated in Fig. 2 in addition to the controller 10. The electronic device 1 according to the one embodiment may appropriately include at least any of the reception antennas 31, the LNAs 32, the mixers 33, the IF units 34, and the AD conversion units 35 instead of or along with the functional units described above. The electronic device 1 according to the one embodiment may include the storage unit 40. As described above, the electronic device 1 according to the one embodiment can employ various configurations. When the electronic device 1 according to the one embodiment is mounted in the mobility device 100, for example, at least any of the functional units described above may be installed at an appropriate place such as the inside of the mobility device 100. On the other hand, in one embodiment, for example, at least any of the transmission antennas 25 and the reception antennas 31 may be installed outside the mobility device 100.

In the embodiments described above, the case where the functions of different types of radars are set (allocated) for each frame or the like of the transmission wave T has been described with reference to Figs. 8 to 10. However, the present disclosure is not limited to such a case. For example, the controller 10 may set any of a plurality of ranges in which an object is detected on the basis of a transmission signal and a reception signal, on the basis of a frame, a part (for example, a subframe) constituting the frame, a chirp signal, or any combination thereof. Reference Signs List

- 1: electronic device
- 5: sensor
- 10: controller
- 11: distance FFT processing unit
- 12: velocity FFT processing unit
- 13: angle-of-arrival estimating unit
- 14: object detecting unit
- 15: detection range determining unit
- 16: parameter setting unit
- 20: transmitter
- 21: signal generating unit
- 22: synthesizer
- 23: phase control unit
- 24: amplifier
- 25: transmission antenna
- 30: receiver
- 31: reception antenna
- 32: LNA
- 33: mixer
- 34: IF unit
- 35: AD conversion unit
- 40: storage unit
- 50: ECU
- 100: mobility device
- 200: object

## Claims

1. An electronic device comprising:
a transmission antenna that transmits a transmission wave;
a reception antenna that receives a reflected wave that is the reflected transmission wave; and
a controller that detects an object that reflects the transmission wave, based on a transmission signal transmitted as the transmission wave and a reception signal received as the reflected wave,
wherein the controller configures a transmission signal in a second frame among a plurality of frames of the transmission wave differently from a transmission signal in a first frame among the plurality of frames.

2. The electronic device according to Claim 1, wherein the controller configures a chirp signal in the second frame differently from a chirp signal in the first frame.

3. The electronic device according to Claim 1 or 2, wherein the controller sets a timing of the transmission signal in the second frame differently from a timing of the transmission signal in the first frame.

4. The electronic device according to any of Claims 1 to 3, wherein the controller sets an order of transmission signals in the second frame differently from an order of transmission signals in the first frame.

5. The electronic device according to any of Claims 1 to 4, wherein the controller sets a combination of transmission signals in the second frame differently from a combination of transmission signals in the first frame.

6. The electronic device according to any of Claims 1 to 5, wherein the controller performs calibration by using the transmission signal included in at least any of the plurality of frames of the transmission wave.

7. A method for controlling an electronic device, the method comprising:
a step of transmitting a transmission wave from a transmission antenna;
a step of receiving, from a reception antenna, a reflected wave that is the reflected transmission wave;
a step of detecting an object that reflects the transmission wave, based on a transmission signal transmitted as the transmission wave and a reception signal received as the reflected wave; and
a step of configuring a transmission signal in a second frame among a plurality of frames of the transmission wave differently from a transmission signal in a first frame among the plurality of frames.

8. A program for causing a computer to perform:
a step of transmitting a transmission wave from a transmission antenna;
a step of receiving, from a reception antenna, a reflected wave that is the reflected transmission wave;
a step of detecting an object that reflects the transmission wave, based on a transmission signal transmitted as the transmission wave and a reception signal received as the reflected wave; and
a step of configuring a transmission signal in a second frame among a plurality of frames of the transmission wave differently from a transmission signal in a first frame among the plurality of frames.
